# EUROPEAN PATENT APPLICATION

(11) **EP 4 694 505 A1**
(43) Date of publication of application: **11.02.2026**
(21) Application number: 24785291.6
(22) Date of filing: 05.04.2024
(51) Int. Cl.: H04W 72/25, H04W 72/04, H04L 5/00, H04W 92/18

(54) **METHOD, COMMUNICATION DEVICE, AND STORAGE MEDIUM FOR CHANNEL TRANSMISSION, AND METHOD, COMMUNICATION DEVICE, AND STORAGE MEDIUM FOR CHANNEL RECEPTION**

(30) Priority: 06.04.2023 KR 20230045671
(71) Applicant: Hyundai Mobis Co., Ltd., Gangnam-gu Seoul 06141 (KR)
(72) Inventor: KIM, Tae Hyoung, Yongin-si, Gyeonggi-do 16891 (KR)
(74) Representative: Jung, Minkyu
(86) International application number: PCT/KR2024/004475
(87) International publication number: WO 2024/210591

(57) **Abstract**

ABSTRACT: A physical control channel for carrying information about subchannels of a physical shared channel in an SCI format is mapped to one of subchannels in a resource pool and transmitted. On the basis that the number of resource blocks available for transmission in a subchannel of the lowest index among the subchannels of the physical shared channel is less than a preconfigured number, the physical shared channel is mapped within an adjacent subchannel rather than the subchannel of the lowest index.

## Description

### TECHNICAL FIELD

The present specification relates to a wireless communication system.

### BACKGROUND

Various devices and technologies, such as machine-to-machine (M2M) communication, machine-type communication (MTC), and a smartphone and a tablet PC that require high data transmission rates, are emerging and becoming widespread. Accordingly, the amount of data required to be processed on cellular networks is rapidly increasing. To meet this rapidly increasing data processing demand, technologies, such as carrier aggregation and cognitive radio, for efficiently using more frequency bands, a multi-antenna technology, a multi-base station (BS) cooperation technology, and the like for increasing data capacity transmitted within limited frequencies are being developed.

Wireless communication systems support communications between user equipment (UEs) using available system resources (e.g., bandwidth, transmission power, etc.). With the introduction of new wireless communication technologies, the number of UEs to which a BS needs to provide services within a preconfigured resource area is increasing, and the amount of data and control information transmitted and received with the UEs served by the BS is also increasing. Since the amount of radio resources available to the BS for communication with the UE(s) is finite, new methods are required to enable the BS to efficiently receive and transmit uplink/downlink data and/or uplink/downlink control information from and to the UE(s) using these limited radio resources. That is, as node density and/or UE density increase, methods for efficiently using high-density nodes or high-density UEs for communication are required. For example, to address the burden on BSs caused by rapidly increasing data traffic, research has focused on using wireless communication technologies to enable direct communication between two or more nearby UEs without traversing network nodes. As the need for vehicle-to-everything (V2X) communication, which is a communication technology that supports wired/wireless communication between vehicles and other vehicles, infrastructure, networks, or pedestrians, arises, a rapid increase in SL communication is anticipated.

### DISCLOSURE

### TECHNICAL PROBLEM

Considering the rapidly growing volume and frequency of SL communication, solutions for stably supporting the SL communication are required.

Objects of the present specification are not limited to the above object, and other objects that are not described will be able to be clearly understood by those skilled in the art to which the present specification pertains based on the following description.

### TECHNICAL SOLUTION

According to an aspect of the present specification, there is provided a method of transmitting, by a communication device, a channel in a wireless communication system. The method includes determining subchannels of a physical shared channel within a resource pool for direct communication between communication devices, mapping a physical control channel carrying a control information format including information on the subchannels to one of the subchannels within the resource pool, mapping the physical shared channel to the subchannels for transmission of the physical shared channel, and transmitting the physical control channel and the physical shared channel on the subchannels to which the physical control channel and the physical shared channel are mapped. The mapping of the physical control channel to one of the subchannels within the resource pool includes mapping the physical control channel to an adjacent subchannel rather than a subchannel of the lowest index of the physical shared channel, based on the number of resource blocks available for transmission within the subchannel of the lowest index among the subchannels of the physical shared channel being less than a preconfigured number.

According to another aspect of the present specification, there is provided a communication device for transmitting a channel in a wireless communication system. The communication device includes at least one transceiver, at least one processor, and at least one memory that is operatively connected to the at least one processor and stores instructions that, when executed, cause the at least one processor to perform operations. The operations include determining subchannels of a physical shared channel within a resource pool for direct communication between communication devices, mapping a physical control channel carrying a control information format including information on the subchannels to one of the subchannels within the resource pool, mapping the physical shared channel to the subchannels for transmission of the physical shared channel, and transmitting the physical control channel and the physical shared channel on the subchannels to which the physical control channel and the physical shared channel are mapped. The mapping of the physical control channel to one of the subchannels within the resource pool includes mapping the physical control channel to an adjacent subchannel rather than a subchannel of the lowest index of the physical shared channel, based on the number of resource blocks available for transmission within the subchannel of the lowest index among the subchannels of the physical shared channel being less than a preconfigured number.

According to still another aspect of the present specification, a computer-readable non-transitory storage medium including at least one computer program that causes at least one processor to perform operations. The operations include determining subchannels of a physical shared channel within a resource pool for direct communication between communication devices, mapping a physical control channel carrying a control information format including information on the subchannels to one of the subchannels within the resource pool, mapping the physical shared channel to the subchannels for transmission of the physical shared channel, and transmitting the physical control channel and the physical shared channel on the subchannels to which the physical control channel and the physical shared channel are mapped. The mapping of the physical control channel to one of the subchannels within the resource pool includes mapping the physical control channel to an adjacent subchannel rather than a subchannel of the lowest index of the physical shared channel, based on the number of resource blocks available for transmission within the subchannel of the lowest index among the subchannels of the physical shared channel being less than a preconfigured number.

According to yet aspect of the present specification, there is provided a method of receiving, by a communication device, a channel in a wireless communication system. The method includes receiving a physical control channel carrying a control information format regarding subchannels of a physical shared channel from a subchannel within a resource pool for direct communication between communication devices, and receiving the physical shared channel on the subchannels of the physical shared channel based on the control information format. The subchannel receiving the physical control channel differs from a subchannel of a lowest index of the physical shared channel, based on the number of resource blocks available for transmission within the subchannel of the lowest index among the subchannels of the physical shared channel being less than a preconfigured number.

According to still aspect of the present specification, there is provided a communication device for receiving a channel in a wireless communication system. The communication device includes at least one transceiver, at least one processor, and at least one memory that is operatively connected to the at least one processor and stores instructions that, when executed, cause the at least one processor to perform operations. The operations includes receiving a physical control channel carrying a control information format regarding subchannels of a physical shared channel from a subchannel within a resource pool for direct communication between communication devices, and receiving the physical shared channel on the subchannels of the physical shared channel based on the control information format. The subchannel receiving the physical control channel differs from a subchannel of a lowest index of the physical shared channel, based on the number of resource blocks available for transmission within the subchannel of the lowest index among the subchannels of the physical shared channel being less than a preconfigured number.

According to yet another aspect of the present specification, a computer-readable non-transitory storage medium including at least one computer program that causes at least one processor to perform operations. The operations includes receiving a physical control channel carrying a control information format regarding subchannels of a physical shared channel from a subchannel within a resource pool for direct communication between communication devices, and receiving the physical shared channel on the subchannels of the physical shared channel based on the control information format. The subchannel receiving the physical control channel differs from a subchannel of a lowest index of the physical shared channel, based on the number of resource blocks available for transmission within the subchannel of the lowest index among the subchannels of the physical shared channel being less than a preconfigured number.

In each aspect of the present specification, the mapping of the physical control channel to one of the subchannels within the resource pool includes mapping the physical control channel to the subchannel of the lowest index of the physical shared channel, based on the number of resource blocks available for transmission within the subchannel of the lowest index among the subchannels of the physical shared channel being not less than the preconfigured number.

In each aspect of the present specification, the preconfigured number may be Nsch configured for the resource pool, where Nsch may be the number of contiguous RBs within each subchannel.

In each aspect of the present specification, the preconfigured number may be NPSCCH configured for the resource pool, where NPSCCH may be the number of RBs for physical control channel transmission within the resource pool.

In each aspect of the present specification, the control information format may include start subchannel information on the subchannel of the lowest index of the physical shared channel.

In each aspect of the present specification, the start subchannel information may include information on whether the subchannel to which the physical control channel is mapped is the subchannel of the lowest index of the physical shared channel.

The above configurations are merely some examples of the present specification, and various examples reflecting the technical features of the present specification can be derived and understood by those skilled in the art based on the following detailed description.

### ADVANTAGEOUS EFFECTS

According to some implementations of the present specification, wireless communication signals can be efficiently transmitted and received. Accordingly, the overall throughput of the wireless communication system can be increased.

According to some implementations of the present specification, the SL communication technology in the licensed spectrum, which is licensed to a specific network operator and can be used exclusively or preferentially by the corresponding network operator, can also be used in the shared spectrum.

According to some implementations of the present specification, sidelink communication can be efficiently performed in the shared spectrum, which is unlicensed spectrum that is not licensed to a specific network operator and can be freely used by multiple network operators.

Effects of the present specification are not limited to the above object, and other effects that are not described will be able to be clearly understood by those skilled in the art to which the present specification pertains based on the following description.

### BRIEF DESCRIPTION OF THE DRAWINGS

FIG. 1 illustrates an example of a communication system (1) to which implementations of the present specification may be applied.
FIG. 2 is a block diagram illustrating examples of communication devices capable of performing a method according to the present specification.
FIG. 3 illustrates an example of a frame structure available in a 3rd Generation Partnership Project (3GPP)-based wireless communication system.
FIG. 4 illustrates a resource grid of a slot.
FIG. 5 illustrates communication links in a wireless communication system.
FIG. 6 is a view for describing frequency resources and time resources for A sidelink.
FIGS. 7 and 8 illustrate transmission structures of physical channels within a slot.
FIG. 9 illustrates a resource block (RB) interlace.
FIG. 10 illustrates interlaced RB-based uplink resource allocation in a shared spectrum.
FIG. 11 illustrates examples of a resource pool structure in a frequency domain for sidelink transmission on the shared spectrum.
FIG. 12 illustrates examples of PSCCH/PSSCH transmissions according to some implementations of the present specification.
FIG. 13 illustrates examples of sidelink transmissions on the shared spectrum having guard bands.
FIGS. 14 to 16 illustrate examples of PSSCH transmissions according to some implementations of the present specification.
FIG. 17 illustrates a portion of a process in which a communication device performs sidelink transmission according to some implementations of the present specification.
FIG. 18 illustrates a portion of a process in which the communication device performs sidelink reception according to some implementations of the present specification.

### DETAILED DESCRIPTION

Hereinafter, various implementations of the present specification will be described in detail with reference to the accompanying drawings. The detailed description set forth below together with the accompanying drawings is intended to illustrate exemplary implementations of the present specification and is not intended to represent the only possible implementations of the present specification. The following detailed description includes specific details to provide a thorough understanding of the present specification. However, those skilled in the art will understand that the present specification may be carried out without these specific details.

In some cases, well-known structures and devices may be omitted or illustrated in the form of a block diagram, focusing on core functions of each structure and device, to avoid obscuring the concepts of the present specification. In addition, the same reference numerals will be used throughout the present specification to describe the same components.

The techniques, devices, and systems, which will be described below, may be applied to various wireless multiple access systems.

For convenience of description, hereinafter, the present specification will be described based on a 3rd Generation Partnership Project (3GPP)-based communication system. However, the technical features of the present specification are not limited thereto. For example, although the following detailed description is based on 3GPP LTE or 5G technology, some implementations of the present specification are also applicable to any other mobile communication system and systems to be introduced in the future (e.g., 6G) except for matters specific to 3GPP LTE/5G.

Among terms and technologies used in the present specification, terms and technologies that are not specifically described may reference 3GPP-based standard documents, for example, 3GPP TS 23.304, 3GPP TS 23.285, 3GPP TS 23.287, 3GPP TS 24.587, 3GPP TS 36.211, 3GPP TS 36.212, 3GPP TS 36.213, 3GPP TS 36.300, 3GPP TS 36.321, 3GPP 36.322, 3GPP TS 36.323, 3GPP TS and 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.322, 3GPP TS 38.323, 3GPP TS 38.331, etc.

In the examples of the present specification, which will be described below, the expression that a device "assumes" may mean that an entity transmitting a channel transmits the channel according to the "assumption." This may mean that an entity receiving the channel receives or decodes the channel according to the "assumption" under the premise that the channel was transmitted according to the "assumption."

In the present specification, user equipment (UE) may be fixed or may have mobility and includes various devices that communicate with a base station (BS) to transmit and/or receive user data and/or various control information. The UE may be referred to as terminal equipment, a mobile station (MS), a mobile terminal (MT), or a user terminal (UT). In addition, in the present specification, the BS generally refers to a fixed station that communicates with a UE and/or other BSs and exchanges various data and control information with the UE and other BSs. The BS may be referred to by other terms, such as an advanced BS (ABS), a node-B (NB), an evolved node-B (eNB), a gNB, a base transceiver system (BTS), an access point (AP), a processing server (PS), etc. Hereinafter, for convenience of description, a base station is referred to as a BS regardless of the type or version of the communication technology.

In the present specification, a node refers to a fixed point capable of transmitting and receiving radio signals in communication with a UE. Various types of BSs, regardless of their names, may be used as nodes. At least one antenna is installed on one node. The antenna may refer to a physical antenna, an antenna port, a virtual antenna, or an antenna group. A node is also referred to as a point.

Meanwhile, 3GPP-based communication systems use the concept of cells to manage radio resources, and the cell associated with radio resources is distinguished from a cell within a geographic area. The "cell" within the geographic area can be understood as a coverage area in which a node may provide services using a carrier, and the "cell" of the radio resource is associated with a bandwidth (BW), which is a frequency range configured by the carrier. Since downlink coverage, which is a range in which a node may transmit valid signals, and uplink coverage, which is a range in which a node may receive valid signals from a UE, depend on the carrier carrying the corresponding signals, the coverage of the node is associated with the coverage of the "cell" of the radio resources used by the node. Accordingly, the term "cell" may be used to sometimes refer to the coverage of the service by the node, sometimes to the radio resource, and sometimes to the range in which the signal using the radio resource may reach with valid strength.

The "cell" associated with the radio resource may be defined as a combination of downlink (DL) resources and uplink (UL) resources, that is, a DL component carrier (CC) and an UL CC. The cell may be configured with the DL resource only or with a combination of the DL and UL resources. When carrier aggregation is supported, linkage between a carrier frequency of the DL resources (or DL CCs) and a carrier frequency of the UL resources (or UL CCs) may be indicated by system information. Here, the carrier frequency may be the same as or different from a center frequency of each cell or CC.

In a wireless communication system, a UE receives information from the BS via the DL, and the UE transmits information to the BS via the UL. The information transmitted and/or received by the BS and the UE includes data and various control information, and various physical channels are present depending on the type and purpose of the information transmitted and/or received by the channels.

3GPP-based communication standards define downlink physical channels corresponding to resource elements carrying information originating from higher-level layers, and downlink physical signals corresponding to resource elements used by the physical layer but not carrying information originating from higher-level layers. For example, a physical downlink shared channel (PDSCH), a physical broadcast channel (PBCH), a physical downlink control channel (PDCCH), and the like are defined as downlink physical channels, and reference signals and synchronization signals are defined as downlink physical signals. A reference signal (RS), also referred to as a pilot, refers to a signal with a predefined, specific waveform known to both the BS and the UE. For example, a demodulation reference signal (DMRS), a channel state information RS (CSI-RS), and the like are defined as downlink reference signals. 3GPP-based communication standards define upperlink physical channels corresponding to resource elements carrying information originating from higher-level layers, and upperlink physical signals corresponding to resource elements used by the physical layer but not carrying information originating from higher-level layers. For example, a physical uplink shared channel (PUSCH), a physical uplink control channel (PUCCH), and a physical random access channel (PRACH) are defined as uplink physical channels and define the demodulation reference signal (DMRS) for uplink control/data signals, a sounding reference signal (SRS) used for uplink channel measurement, etc.

In the present specification, the PDCCH refers to a set of time-frequency resources (e.g., resource elements (REs)) carrying downlink control information (DCI), and the PDSCH refers to a set of time-frequency resources carrying downlink data. In addition, the PUCCH, the PUSCH, and the PRACH refer to sets of time-frequency resources carrying uplink control information (UCI), uplink data, and a random access preamble, respectively. Hereinafter, the expression that a UE/BS transmits/receives a PUCCH/PUSCH/PRACH is used with the same meaning as transmitting/receiving UCI/uplink data/random access preamble on or via the PUCCH/PUSCH/PRACH, respectively. In addition, the expression that a BS/UE transmits/receives a PBCH/PDCCH/PDSCH is used with the same meaning as transmitting/receiving broadcast information/DCI/downlink data on or via the PBCH/PDCCH/PDSCH, respectively.

In the present specification, radio resources (e.g., time-frequency resources) scheduled or configured by the BS to the UE for transmission or reception of the PUCCH/PUSCH/PDSCH are also referred to as PUCCH/PUSCH/PDSCH resources.

Since a communication device receives physical channels and/or physical signals in the form of radio signals, it is not possible to selectively receive, via a radio frequency (RF) receiver, only those radio signals that include a specific physical channel or a specific physical signal, or to selectively receive, via the RF receiver, only those radio signals that exclude a specific physical channel or a specific physical signal. In actual operation, the communication device first receives the radio signals on the cell via the RF receiver, converts the received radio signals, which are RF band signals, into baseband signals, and decodes the physical signals and/or physical channels within the baseband signals using one or more processors. Accordingly, in some implementations of the present specification, when the physical signal and/or the physical channel are not received, it does not actually mean that the communication device does not receive radio signals including the physical signal and/or the physical channel at all, but rather does not attempt to recover the physical signal and/or the physical channel, for example, does not attempt to decode the physical signal and/or the physical channel from the radio signals.

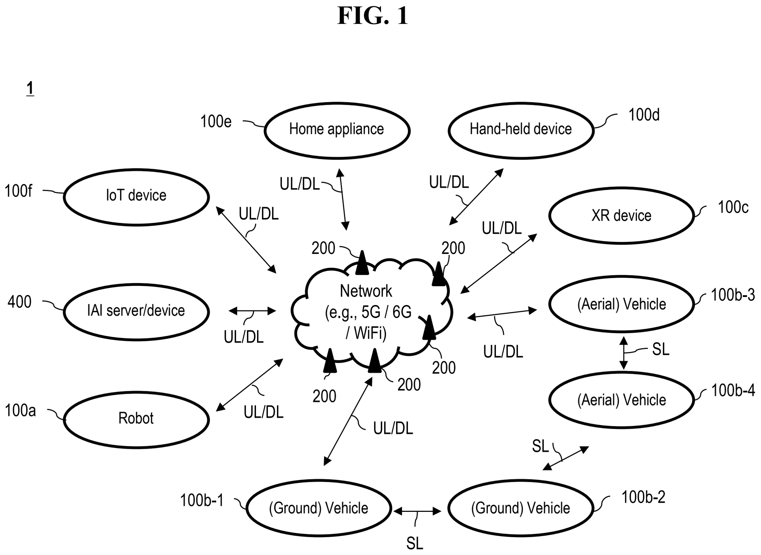

FIG. 1 illustrates an example of a communication system 1 to which implementations of the present specification may be applied.

Referring to FIG. 1, the communication system 1 applied to the present specification includes a wireless device, a base station (BS), and a network. Here, the wireless device may refer to a device that performs communication using wireless access technology (e.g., 5G NR (New RAT), LTE (e.g., E-UTRA), Wi-Fi, and 6G to be introduced in the future).

Although not limited thereto, the wireless device may include a robot 100a, vehicles 100b-1, 100b-2, 100b-3, an 100b-4, an eXtended Reality (XR) device 100c, a hand-held device 100d, a home appliance 100e, an Internet of Things (IoT) device 100f, and an artificial intelligence (AI) device/server 400. For example, the vehicle may include a ground vehicle having wireless communication capability, an autonomous vehicle, a vehicle capable of communicating between vehicles, etc. Here, the vehicle may include an unmanned aerial vehicle (UAV) (e.g., a drone) and an urban air mobility (UAM) (e.g., an unmanned aerial traffic). The XR device may include augmented reality (AR)/virtual reality (VR)/mixed reality (MR) devices. The mobile device may include a smartphone, a smartpad, a wearable device (e.g., a smartwatch, smart glasses), a computer (e.g., a laptop), etc. The home appliance may include a TV, a refrigerator, a washing machine, etc. The IoT device may include a sensor, a smart meter, etc. For example, the BS and the network may also be implemented as wireless devices, and a specific wireless device may operate as a BS/network node for other wireless devices.

The wireless devices 100a to 100f may be connected to the network via the BS 200. The wireless devices 100a to 100f may adopt AI technology and may be connected to the AI server 400 via a network. The wireless devices 100a to 100f may communicate with each other via the BS 200/network, but may directly communicate with each other (e.g., sidelink communication) without the BS/network. For example, the vehicles 100b-1, 100b-2, 100b-3, and 100b-4 may directly communicate with each other (e.g., vehicle to vehicle (V2V)/vehicle to everything (V2X) communication). In addition, the IoT device (e.g., a sensor) may communicate directly with other IoT devices (e.g., a sensor) or other wireless devices 100a to 100f.

Wireless communication/connection may be established between the wireless devices 100a to 100f/BS 200 and the BS 200/wireless devices 100a to 100f. Here, wireless communication/connection may be established through various wireless access technologies (e.g., 5G NR) for uplink/downlink (UL/DL) communication and sidelink (SL) communication (or D2D communication). Through wireless communication/connection (UL/DL, SL), the wireless device and the BS/the wireless device may transmit/receive radio signals. To this end, at least some of various configuration information configuration processes, various signal processing processes (e.g., channel encoding/decoding, modulation/demodulation, resource mapping/demapping, and the like), a resource allocation process, and the like for transmitting/receiving radio signals may be performed based on various proposals of the present specification.

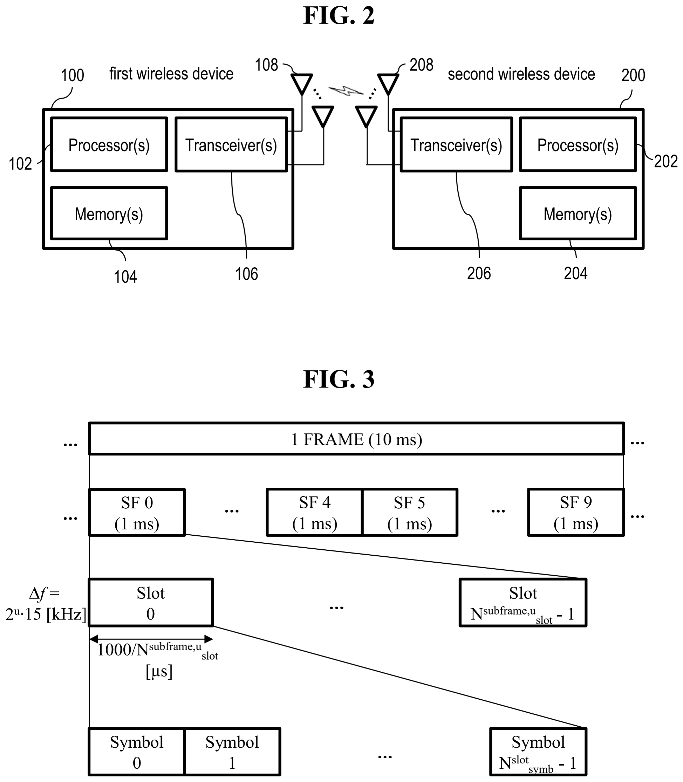

FIG. 2 is a block diagram illustrating examples of communication devices capable of performing a method according to the present specification. Referring to FIG. 2, a first wireless device 100 and a second wireless device 200 may transmit and/or receive radio signals using various wireless access technologies. Here, the first wireless device 100 and the second wireless device 200 may correspond one-to-one to the wireless device 100x and the BS 200 and/or the wireless device 100x and the wireless device 100x of FIG. 1.

Each of the first wireless device 100 and the second wireless device 200 includes one or more processors 102 and 202 and one or more memories 104 and 204 and further include one or more transceivers 106 and 206 and/or one or more antennas 108. The processors 102 and 202 may be configured to control the memories 104 and 204 and/or the transceivers 106 and 206 and implement functions, procedures, and/or methods, which will be described/suggested below. For example, the processors 102 and 202 may process information in the memories 104 and 204 to generate first information/signal and transmit a radio signal including the first information/signal via the transceivers 106 and 206. In addition, the processors 102 and 202 may receive a radio signal including second information/signal via the transceivers 106 and 206 and store information obtained by processing the second information/signal in the memories 104 and 204. The memories 104 and 204 may be connected to the processors 102 and 202 and may store various information related to the operations of the processors 102 and 202. For example, the memories 104 and 204 may perform some or all of processes controlled by the processors 102 and 202 or store software code including commands for performing the procedures and/or methods, which will be described/proposed below. Here, the processors 102 and 202 and the memories 104 and 204 may be portions of a communication modem/circuit/chip designed to implement wireless communication technology. The transceivers 106 and 206 may be connected to the processors 102 and 202 and may transmit and/or receive radio signals via one or more antennas 108 and 208. The transceivers 106 and 206 may include a transmitter and/or a receiver.

Although not limited thereto, one or more protocol layers may be implemented by the one or more processors 102 and 202. For example, the one or more processors 102 and 202 may implement one or more layers (e.g., functional layers such as a physical (PHY) layer, a medium access control (MAC) layer, a radio link control (RLC) layer, a packet data convergence protocol (PDCP) layer, a radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present specification. The one or more processors 102 and 202 may generate messages, control information, data, or information according to the functions, procedures, proposals, and/or methods disclosed in the present specification. The one or more processors 102 and 202 may generate signals (e.g., baseband signals) containing PDUs, SDUs, messages, control information, data, or information according to the functions, procedures, proposals, and/or methods disclosed in the present specification and provide the signals to the one or more transceivers 106 and 206. The one or more processors 102 and 202 may receive signals (e.g., baseband signals) from the one or more transceivers 106 and 206 and acquire PDUs, SDUs, messages, control information, data, or information according to the functions, procedures, proposals, and/or methods disclosed in the present specification.

The one or more processors 102 and 202 may be referred to as a controller, a microcontroller, a microprocessor, or a microcomputer. The one or more processors 102 and 202 may be implemented by hardware, firmware, software, or a combination thereof, and the firmware or software may be implemented to include modules, procedures, functions, etc. Firmware or software configured to perform the functions, procedures, proposals, and/or methods disclosed in the present specification may be included in the one or more processors 102 and 202 or stored in the one or more memories 104 and 204 and executed by the one or more processors 102 and 202. The functions, procedures, suggestions, and/or methods disclosed in the present specification may be implemented using firmware or software in the form of code, instructions, and/or sets of instructions.

The one or more memories 104 and 204 may be coupled to the one or more processors 102 and 202 and may store various forms of data, signals, messages, information, programs, codes, instructions, and/or commands. The one or more memories 104 and 204 may be located inside and/or outside the one or more processors 102 and 202. In addition, the one or more memories 104 and 204 may be connected to the one or more processors 102 and 202 using various technologies, such as wired or wireless connections.

The one or more transceivers 106 and 206 may transmit/receive user data, control information, wireless signals/channels, and the like, as described in the methods and/or operational flowcharts of the present specification, to/from one or more other devices. In addition, the one or more processors 102 and 202 may control the one or more transceivers 106 and 206 to transmit/receive user data, control information, or wireless signals to/from one or more other devices. In addition, the one or more transceivers 106 and 206 may be connected to the one or more antennas 108 and 208, and the one or more transceivers 106 and 206 may be configured to transmit and/or receive user data, control information, wireless signals/channels, and the like, as described in the functions, procedures, proposals, methods, and/or operational flowcharts disclosed in the present specification, via the one or more antennas 108 and 208. In the present specification, the one or more antennas may be a plurality of physical antennas or a plurality of logical antennas (e.g., antenna ports). The one or more transceivers 106 and 206 may convert received user data, control information, wireless signals/channels, and the like from RF band signals into baseband signals to process the received user data, control information, wireless signals/channels, and the like using the one or more processors 102 and 202. The one or more transceivers 106 and 206 may convert user data, control information, wireless signals/channels, and the like processed using the one or more processors 102 and 202 from baseband signals to RF band signals. To this end, the one or more transceivers 106 and 206 may include an (analog) oscillator and/or a filter.

In the present specification, the one or more memories 104 and 204 may store instructions or programs, and during execution, the instructions or programs may cause the one or more processors 102 and 202 operably connected to the one or more memories to perform operations according to some embodiments or implementations of the present specification.

In the present specification, a computer-readable (non-transitory) storage medium may store one or more instructions or computer programs, and when executed by the one or more processors, the one or more instructions or computer programs may cause the one or more processors to perform the operations according to some embodiments or implementations of the present specification.

FIG. 3 illustrates an example of a frame structure available in a 3GPP-based wireless communication system.

The frame structure of FIG. 3 is merely an example, and the number of subframes, the number of slots, and the number of symbols in the frame may be diverse. In some wireless communication systems, an orthogonal frequency division multiplexing (OFDM) numerology (e.g., subcarrier spacing (SCS)) may be set differently between a plurality of cells aggregated to one UE. Accordingly, an (absolute time) duration of a time resource configured with the same number of symbols (e.g., a subframe, a slot, or a transmission time interval (TTI)) may be set differently among aggregated cells. Here, the symbol may include an OFDM symbol (or a cyclic prefix-OFDM (CP-OFDM) symbol) and an SC-FDMA symbol (or a discrete Fourier transform-spread-OFDM (DFT-s-OFDM) symbol). In the present specification, the symbol, the OFDM-based symbol, the OFDM symbol, the CP-OFDM symbol, and the DFT-s-OFDM symbol may be interchangeable.

Referring to FIG. 3, uplink and downlink transmissions are organized in units of frames. Each frame has a duration of T_{f}=(Δfₘₐₓ*N_{f/}100)*T_{c}=10 ms, where T_{c} (basic time unit)=1/(Δfₘₐₓ*Nr), Δfₘₐₓ=480*103 Hz, and N_{f}=4096. For reference, the sampling time Ts=1/(Δf_{ref}*N_{f,ref}), Δf_{ref}=15*103 Hz, and N_{f,ref}=2048 Tc and Tf have a relationship of κ (constant)=T_{c}/T_{f}=64. A frame consists of 10 subframes, and a duration of a single subframe, T_{sf}, is 1 ms. The subframes are further divided into slots, and the number of slots in a subframe depends on the subcarrier spacing. Each slot may consist of N^{slot}_{symb} symbols based on a cyclic prefix (CP). For example, in some scenarios, each slot consists of 14 OFDM symbols in the case of a normal CP and 12 OFDM symbols in the case of an extended CP. The numerology depends on the exponentially scalable subcarrier spacing Δf=2^{u}*15 kHz. The following table shows the number of OFDM symbols per slot (N^{slot}_{symb}), the number of slots per frame (N^{frame}ₛₗₒₜ), and the number of slots per subframe (N^{subframe,u}ₛₗₒₜ) according to the subcarrier spacing Δf=2^{u}*15 kHz for the normal CP.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

The following table shows the number of OFDM symbols per slot, the number of slots per frame, and the number of slots per subframe according to the subcarrier spacing Δf=2^{u}*15 kHz for the extended CP.

**[Table 2]**

| *u* | *N*^{siot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots are numbered in increasing order within a subframe as nus ∈ {0, ..., n^{subframe,u}ₛₗₒₜ-1} and in increasing order within a frame as n^{u}_{s,f} ∈ {0 , ..., n^{frame,u}ₛₗₒₜ-1}.

Hereinafter, implementations of the present specification are described by referring to the minimum unit of time for scheduling uplink, downlink, and sidelink transmissions as a slot, but the minimum unit of time for scheduling may be referred to by different terms depending on the wireless communication system. For example, in an LTE-based system, the minimum unit of time for scheduling transmissions is referred to as a subframe or a transmission time interval (TTI), while, in an NR-based system, the minimum unit of time for scheduling is referred to as a slot.

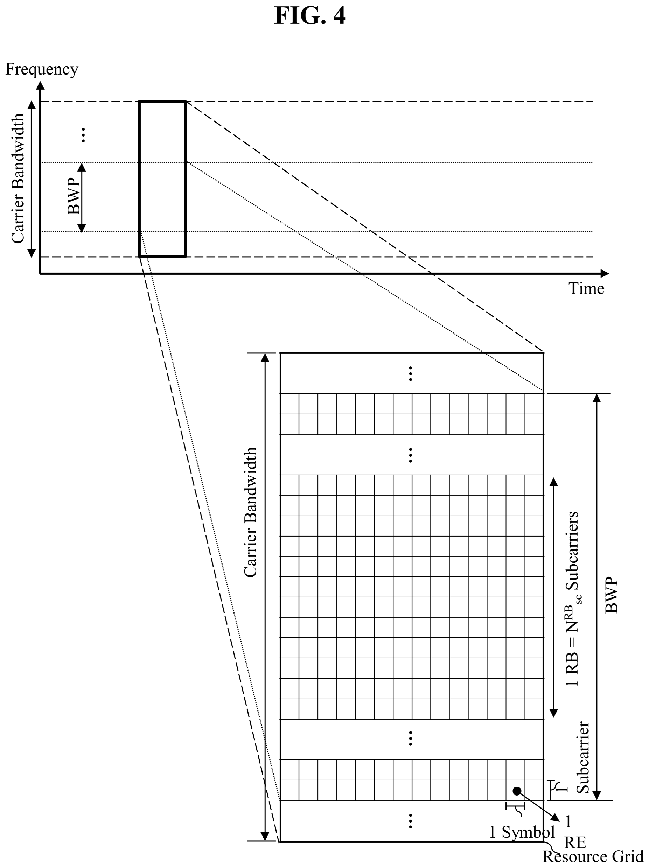

FIG. 4 illustrates a resource grid of a slot. A slot includes a plurality of symbols (e.g., N^{slot}_{symb}) in a time domain. For each numerology (e.g., a subcarrier spacing) and carrier, a resource grid of N^{size,u}_{grid,x}*N^{RB}_{sc} subcarriers and N^{subframe,u}_{symmb} OFDM symbols starting from a common resource block (CRB) N^{size,u}_{grid} indicated by higher-level layer signaling (e.g., radio resource control (RRC) signaling) is defined. Here, N^{size,u}_{grid,x} is the number of resource blocks (RBs) in the resource grid, and the subscript x is DL for downlink and UL for uplink. N^{RB}_{sc} is the number of subcarriers per RB, and N^{RB}_{sc} is typically 12 in 3GPP-based wireless communication systems. There is one resource grid for a given antenna port p, a subcarrier spacing configuration u, and a transmission direction (DL or UL). A carrier bandwidth N^{size,u}_{grid} for the subcarrier spacing configuration u is provided to the UE by a higher-level layer parameter (e.g., an RRC parameter) from the network. Each element in the resource grid for the antenna port p and the subcarrier spacing configuration u is referred to as a resource element (RE), and each RE may be mapped to one complex-valued symbol. Each RE within the resource grid is uniquely identified by an index k in the frequency domain and an index 1 indicating a symbol position with respect to a reference point in the time domain. The RBs may be classified into CRBs and physical resource blocks (PRBs). The CRBs are numbered upwards from 0 in the frequency domain for the subcarrier spacing configuration u. The center of subcarrier 0 of CRB 0 for the subcarrier spacing configuration u coincides with "Point A," which is a common reference point for RB grids. The PRBs for the subcarrier spacing configuration u are defined within a bandwidth part (BWP) and are numbered from 0 to N^{size,u}_{BWP,i}-1, where i is the number of the bandwidth part. A relationship between the CRB n^{u}_{CRB} and the PRB n_{PRB} within bandwidth part i is as follows. n^{u}_{PRB}=n^{u}_{CRB}+N^{start,u}_{BWP,i}, where N^{start,u}_{BWP,i} is a CRB in which the bandwidth part starts relative to CRB 0. A BWP includes a plurality of contiguous RBs in the frequency domain. For example, the BWP is a subset of contiguous CRBs defined for a given numerology uᵢ within BWP i on a given carrier. The carrier may include up to N (e.g., 5) BWPs. A UE may be configured to have one or more BWPs on a given component carrier. Data communication is performed through the activated BWPs, and only a predetermined number (e.g., 1) of BWPs configured for the UE may be activated on the corresponding carrier.

For each BWP, the UE may receive at least one of the following parameters for a serving cell: i) a subcarrier spacing, ii) a CP, iii) assuming that N^{start}_{BWP}=275, CRB N^{start}_{BWP}=O_{carrier}+RBₛₜₐᵣₜ and the number of contiguous RBs N^{size}_{BWP}=LRB, which are provided by an RRC parameter locationAndBandwidth indicating an offset RBₛₑₜ and a length LRB as resource indicator values (RIVs), the number of contiguous RBs N^{size}_{BWP}=LRB, and O_{carrier} provided by an RRC parameter offsetToCarrier for a subcarrier spacing; indexes within the DL BWPs or UL BWPs; and a set of BWP-common parameters and a set of BWP-dedicated parameters.

Virtual resource blocks (VRBs) are defined within a bandwidth part and are numbered from 0 to N^{size,u}_{BWP,i}-1, where i is the number of the bandwidth part. The UE may assume that the VRBs are mapped to PRBs according to the mapping method indicated to the UE (e.g., non-interleaved or interleaved mapping). When no mapping method is indicated, the UE assumes non-interleaved mapping. In non-interleaved VRB-to-PRB mapping, VRB n may be mapped to PRB n. In interleaved VRB-to-PRB mapping, VRBs may be mapped to PRBs in a distributed manner according to predefined rules.

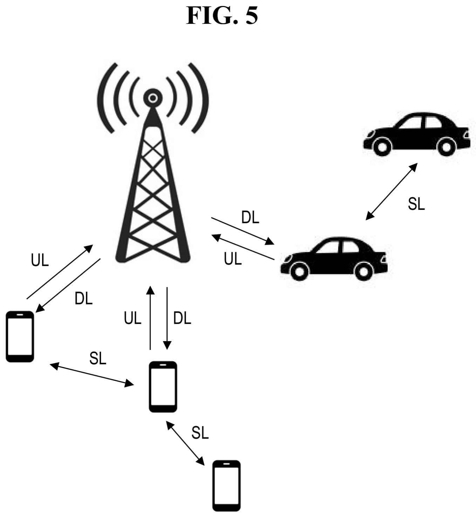

FIG. 5 illustrates communication links in a wireless communication system.

Referring to FIG. 5, in a wireless communication system, a UE receives information from a BS via the DL and transmits information to the BS via the UL. As a solution to address the burden on BSs due to rapidly increasing data traffic, research has focused on a technology for supporting direct communication between two or more nearby UEs without traversing network nodes using wireless communication technology (hereinafter referred to as SL communication). For UEs inside or outside the coverage of the BS, one UE may transmit data to the other UE via sidelink, which supports UE-to-UE direct communication using sidelink resource allocation modes, physical layer signals/channels, and physical layer processes, without traversing the network.

Transmissions in SL use OFDM waveforms with a CP. The frame structure described in FIG. 3 and the resource grid structure described in FIG. 4 may be applied to the SL. In some scenarios, for example, in NR V2X, only specific slots may be (pre-)configured to accommodate SL transmissions, and the available SL resources may consist of (common) RBs within SLs (time resources) and SL BWPs (frequency resources). A subset of the available SL resources may be (pre-)configured to be used by several UEs for SL transmissions. This subset of available SL resources is referred to as a resource pool.

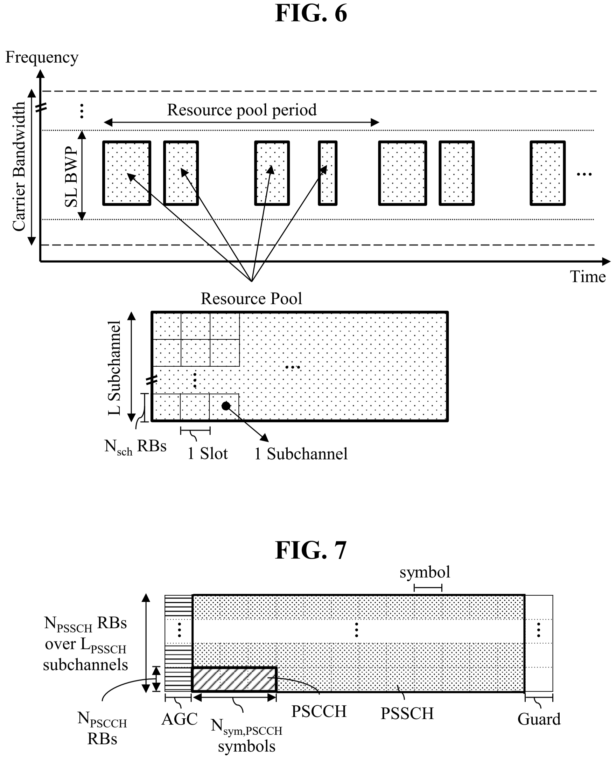

FIG. 6 is a view for describing frequency resources and time resources for an SL.

Referring to FIG. 6, the resource pool consists of (pre-configured) i) contiguous PRBs and ii) contiguous or non-contiguous slots for SL transmissions. The concept of the BWP may also be applied to the SL. A UE may be configured with a BWP having a numerology and resource grid for SL transmissions. Hereinafter, the BWP configured for SL transmissions is referred to as an SL BWP. The SL BWP may occupy a contiguous portion of a bandwidth within a carrier. SL transmissions and receptions may occur within the SL BWP. A resource pool may be defined within the SL BWP, and a single numerology is used within the resource pool. The resource pool may be shared by several UEs for SL transmissions and used for all transmission types (e.g., unicast, groupcast, and broadcast). The UE may be configured with one or more SL resource pools via higher-level layer signaling (e.g., RRC signaling). The UE may transmit on the SL using its own transmission resource pool(s) and also receive data on resource pools used for SL transmissions by other UE(s).

In the frequency domain, the resource pool is divided into a (pre-)configured number L of contiguous subchannels, each of which consists of a group of consecutive RBs within a slot. The number of RBs in a subchannel, N_{sch}, corresponds to the size of the subchannel and is pre-configured for the resource pool. L and N_{sch} may be provided to the UE via higher-level layer signaling (e.g., RRC signaling). A first RB of a first subchannel within the SL BWP is pre-configured through the RRC signaling. For example, based on the lowest RB index of the SL BWP, the lowest RB index of the subchannel of the lowest index within the resource pool may be provided to the UE(s). In NR V2X, the size of the subchannel, N_{sch}, may be equal to 10, 12, 15, 20, 25, 50, 70, or 100 RBs. In the SL, a subchannel represents the smallest unit for SL data transmission or reception. The SL transmission may be performed using one or more subchannels.

In the time domain, slots that are a portion of the resource pool are (pre-)configured and occur at a predetermined interval (e.g., every 10240 ms). In each slot of the resource pool, only a subset of consecutive symbols among the N^{slot}_{symb} symbols per slot are (pre-)configured for the SL. The subset of SL symbols per slot is indicated by a start symbol and the number of consecutive symbols, which are (pre-)configured per resource pool.

3GPP-based communication standards define sidelink physical channels corresponding to resource elements carrying information originating from higher-level layers, and sidelink physical signals corresponding to resource elements used by the physical layer but not carrying information originating from higher-level layers. For example, a physical sidelink shared channel (PSSCH), a physical sidelink control channel (PSCCH), a physical sidelink broadcast channel (PSBCH), a physical sidelink feedback channel (PSFCH), and the like may be used as sidelink physical channels. In the present specification, the PSCCH carries SL control information (SCI) on the SL. For example, the SCI is used to indicate resources and other transmission parameters used by the UE for the PSSCH, and the PSCCH transmission is associated with a demodulation reference signal (DM-RS). The PSSCH may carry the data payload and additional control information on the SL. Data may be organized in units of transport block (TB), and each TB may be associated with the SCI. For example, the PSSCH is used to carry control information for TB(s), hybrid automatic repeat request (HARQ) processes, and CSI feedback triggering. In some scenarios, at least six OFDM symbols are used for PSSCH transmission within a slot, and the PSSCH is associated with the DM-RS. The PSBCH may carry information to support synchronization on the SL, and in some scenarios, the PSBCH may be transmitted within a sidelink synchronization signal block (S-SSB). The PSFCH carries HARQ feedback on the SL from the intended recipient UE of the PSSCH to the UE performing the PSSCH transmission. Hereinafter, the UE performing the SL transmission is referred to as a TX UE, and the intended recipient(s) of the SL transmission are referred to as an RX UE(s).

In some scenarios, the SCI is transmitted in two stages. For example, in NR V2X, a first-stage SCI may be carried on the PSCCH, and a second-stage SCI may be carried on the corresponding PSSCH. The division of the SCI into the first-stage SCI and the second-stage SCI allows UEs other than the RX UEs for the SL transmission to decode only the first-stage SCI for channel sensing purposes, that is, to determine resources reserved by other transmissions. Meanwhile, the second-stage SCI provides additional control information required for the RX UE(s) for the SL transmission.

The number of symbols used for the SL transmission within the slot may vary depending on the physical channels carried within the slot.

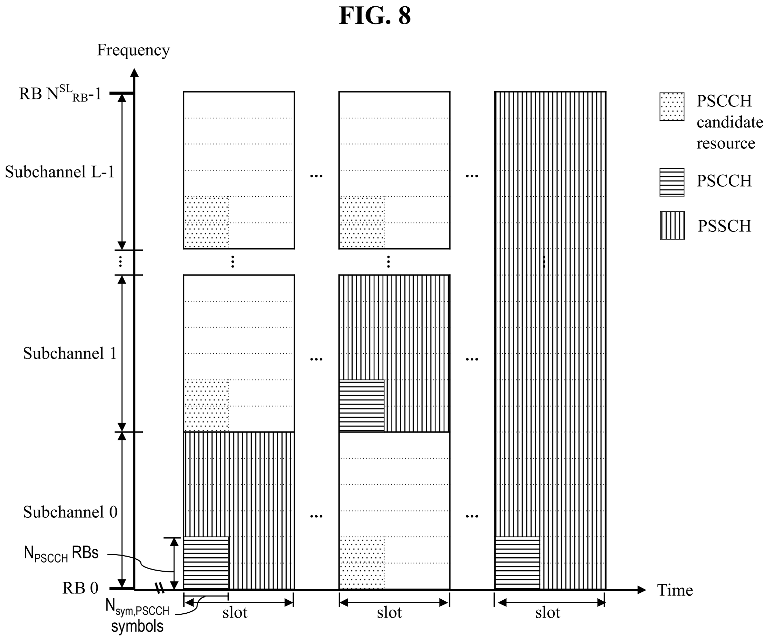

FIGS. 7 and 8 illustrate transmission structures of physical channels within a slot.

The PSCCH may be multiplexed with the associated PSSCH on non-overlapping resources within the same slot. Referring to FIG. 7, the PSCCH is transmitted starting from the lowest RB within the subchannel(s) occupied by the associated PSSCH in the frequency domain and starting from the second symbol within the slot in the time domain. The number of symbols for the PSCCH is (pre-)configured per resource pool and may be, for example, 2 or 3 symbols. In some scenarios (e.g., NR V2X), the PSCCH occupies the RBs of the N_{PSCCH} in the frequency domain, and the N_{PSCCH} may be (pre-)configured to the UE(s) per resource pool through higher-level layer signaling (e.g., RRC signaling). In some scenarios (e.g., NR V2X), the N_{PSCCH} may be configured to be equal to 10, 12, 15, 20, or 25 RBs per resource pool. In some scenarios (e.g., NR V2X), the N_{PSCCH} is contained within a single subchannel, and the number of RBs for the PSCCH, N_{PSCCH}, may be constrained by the number of RBs within the subchannel, N_{sch} (i.e., N_{PSCCH}<=N_{sch}). The PSCCH carries the first-stage SCI including control information associated with the PSSCH and the second-stage SCI. To this end, SCI format 1-A may be used, for example. The first-stage SCI may indicate the frequency resources (e.g., subchannel(s)) of the PSSCH carrying the current (re-)transmission of the TB and indicate resource reservation for up to a predefined number (e.g., 2) of retransmission(s) of the TB. The first-stage SCI may include the priority of the associated PSSCH and include information on the format and size of the second-stage SCI. The first-stage SCI may include information on the modulation and coding scheme (MCS) of the TB carried on the associated PSSCH. Although not illustrated in FIG. 7, a DM-RS associated with the PSCCH (hereinafter, "PSCCH DM-RS") may be transmitted within the PSCCH for demodulation of the PSCCH. For example, each PSCCH symbol (i.e., an OFDM symbol including the PSCCH) may include the PSCCH DM-RS. As not illustrated in FIG. 7, the DM-RS associated with the PSSCH is carried on different symbols within a slot to which the PSSCH is allocated (hereinafter referred to as a "PSSCH slot"). Multiple time patterns may be (pre-)configured for the PSSCH DM-RS within a resource pool, and the first-stage SCI may include information on which time pattern is used for the associated PSSCH.

The PSSCH carries a data payload consisting of the second-stage SCI and the TB(s). The second-stage SCI may carry information used to decode the PSSCH and information to support HARQ feedback and CSI reporting. The second-stage SCI may include a Layer 1 source ID representing an identifier (within the physical layer) of a TX UE and a Layer 1 destination ID representing identifier(s) of the intended receiver(s) (RX UE(s)) of the corresponding TB. The second-stage SCI may carry a 1-bit new data indicator (NDI) used to specify whether the TB transmitted on the PSSCH corresponds to a new data transmission or a retransmission. After decoding the first-stage SCI in the PSCCH, the RX UE has the information necessary to decode the second-stage SCI. The second-stage SCI may be decoded using the PSSCH DM-RS. Before being mapped to the PSSCH, the second-stage SCI and the TB are each channel-coded and multiplexed according to a predefined process. Depending on the number of layers (i.e., the number of data streams) supported on the PSSCH, the multiplexed second-stage SCI and TB are mapped to one or two layers and precoded before being mapped to L_{PSSCH} subchannel(s) of the PSSCH. The PSSCH occupies N_{PSSCH}=L_{PSSCH}*N_{sch} RBs starting from the lowest RB in the subchannel carrying the corresponding PSCCH, where the N_{PSSCH} is the number of RBs occupied by the PSSCH, the L_{PSSCH} is the number of subchannels for the PSSCH, and N_{sch} is the number of RBs per subchannel.

Referring to FIG. 7, the PSSCH may be transmitted from a second symbol to the second to last symbol within the slot or from the second symbol to the symbol immediately preceding the last symbol within the slot. In some scenarios, 7 to 14 symbols may be (pre-)configured for SL within the slot, and the PSCCH may be transmitted in 5 to 12 consecutive symbols. The number of symbols occupied by the PSSCH depends on the number of SL symbols allocated within the slot and whether the PSFCH is transmitted from that slot. Within the symbols carrying the PSCCH, the PSSCH may be multiplexed with the PSCCH in the frequency domain (when the PSCCH does not occupy the entire LPSSCH subchannel(s)). The second symbol within the slot (i.e., the first symbol including the PSCCH or the PSCCH/PSSCH) may be duplicated into the first symbol of the slot for automatic gain control (AGC) purposes. Additionally, the symbol after the last symbol with the PSSCH may be used as a guard symbol.

FIG. 7 illustrates a SL transmission structure in which the PSCCH occupies three symbols in the time domain and 14 symbols in a slot consisting of 14 symbols are used for the PSCCH/PSSCH transmission, but the PSCCH may occupy two symbols, or some leading symbols within the slot may be used for the PSCCH/PSSCH transmission and the remaining symbols may be used for the PSFCH or for additional guard symbols.

Referring to FIG. 8, in some scenarios (e.g., NR V2X), for a resource pool having L subchannels, there are L possible PSCCH positions within the slot, starting from the second SL symbol within the slot and from the lowest RB within each subchannel. That is, for the resource pool having the L subchannels, L PSCCH candidate resources may be present in each slot. Accordingly, in some scenarios, to receive the first-stage SCI, the UE needs to identify (or monitor) L possible PSCCH positions in each slot within the resource pool.

Referring to FIGS. 7 and 8, in some scenarios (e.g., NR V2X), the UE receives the number of symbols for the PSCCH, N_{sym}, PSCCH, and the number of RBs for the PSCCH, N_{PSCCH}, for the resource pool via higher-level layer signaling (e.g., RRC signaling), and the PSCCH starts from the second symbol available for SL transmissions within the slot and is transmitted on N_{PSCCH} RBs, starting the lowest RB of the lowest subchannel of the associated PSSCH within N_{sym,PSCCH} symbols.

The UE may be configured with one or more SL resource pools via higher-level layer signaling (e.g., RRC signaling). A SL resource pool may be used for transmitting or receiving the PSSCH. In some scenarios, the PSSCH is transmitted in the same slot as the associated PSCCH. In some scenarios, the minimum resource allocation unit for the PSSCH in the time domain is a slot. The PSSCH transmitted in the consecutive symbols within the slot is not transmitted in symbols not configured for the SL. The index of the first symbol among the consecutive symbols that may be used for the SL and the number of consecutive symbols that may be used for the SL may be provided to the UE(s) through the higher-level layer signaling (e.g., RRC signaling). The UE does not transmit the PSSCH in the last symbol configured for the SL, and the last symbol may be used as a guard symbol. In some scenarios, the minimum resource allocation unit for the PSSCH in the frequency domain is a subchannel.

Referring to FIG. 8, when the PSCCH is transmitted/received in a PSCCH resource candidate of the slot within the resource pool, the PSSCH associated with the PSCCH is transmitted/received within consecutive symbols within the slot in the time domain and transmitted/received on L_{PSSCH} subchannels having the subchannel on which the PSCCH is transmitted/received as the lowest subchannel in the frequency domain. When the PSSCH occupies a plurality of subchannels, the PSCCH resource candidate(s) of the remaining subchannel(s) rather than the lowest subchannel among the plurality of subchannels are used for transmitting the PSSCH. The PSCCH resource candidate(s) of the subchannel(s) not used for transmitting the PSSCH in a slot within the resource pool are also not used for the PSCCH transmission. The RX UE may attempt to detect a PSCCH from the PSCCH resource candidates, and when detecting the PSCCH in the slot, may consider the lowest RB in which the PSCCH is detected as the lowest RB of the PSSCH based on the SCI carried by the PSCCH, and receive the PSSCH on N_{PSSCH}=L_{PSSCH}*N_{sch} RBs, starting from the lowest RB.

As the need for V2X communication, which is a communication technology that supports wired/wireless communication between vehicles and other vehicles, infrastructure, networks, or pedestrians, arises, a rapid increase in SL communication is anticipated. To stably support the SL communication, it may be considered to support the SL communication both in a licensed spectrum, which is licensed to a specific network operator and may be used exclusively or preferentially by the network operator, but also in a shared spectrum (i.e., unlicensed spectrum), which is not licensed to the specific network operator and may be freely used by multiple network operators. However, to support the SL communication in the shared spectrum, there is a need for a method for coexistence with the SL communication in the shared spectrum. Hereinafter, 3GPP-based communication technologies applicable to uplink and/or downlink communication between UEs and BSs in the shared spectrum will be described.

Unless otherwise stated, the following definitions may be applied to terms related to the shared spectrum in the present specification.
- Channel: consists of contiguous RBs on which a channel access procedure is performed in the shared spectrum and may refer to a carrier or a portion of the carrier.
- Channel access procedure (CAP) refers to a procedure of assessing channel availability based on sensing to determine whether to use other communication device(s) prior to signal transmission. The BS or UE senses the channel during a sensing slot section, and when the detected power is less than an energy detection threshold value for at least a predetermined time within the sensing slot section, the sensing slot section is considered idle or free, and otherwise, the sensing slot section is considered busy. The CAP may be referred to as listen-before-talk (LBT).
- Channel occupancy refers to the transmission(s) on the channel(s) by the BS/UE after performing the CAP.
- Channel occupancy time (COT) refers to the total time that the BS/UE and any BS/UE(s) sharing the channel occupancy may perform transmission(s) on the channel after the BS/UE performs the CAP. The COT may be shared for transmissions between the BS and the corresponding UE(s).

Since the shared spectrum is not dedicated to a specific network operator, the BS and the UE may apply the LBT before performing the transmission on the cell configured with shared spectrum channel access. When the LBT is applied, the transmitter listens/detects the channel to determine whether the channel is free or busy and performs transmission only when the channel is considered free. That is, for the shared spectrum, a communication device needs to determine whether to use the channel of other communication device(s) before signal transmission.

In the shared spectrum, the size of the time interval and/or frequency occupancy area and/or power spectrum density (PSD) of the signal/channel transmitted by the UE may each be required to be a predetermined level or more regarding channel occupancy. For example, the communication device may be required to perform transmission in the shared spectrum with the size of the time interval and/or frequency occupancy area, and/or the PSD of the signal/channel, which are the predetermined level or more. In consideration of such regulations related to an occupied channel bandwidth (OCB) and PSD for the shared spectrum, a set of (evenly spaced) non-contiguous RBs in the frequency domain may be defined as a resource unit used for physical channel/signal transmission. Hereinafter, such a set of non-contiguous RBs is referred to as an interlaced RB, an RB interlace, or an interlace.

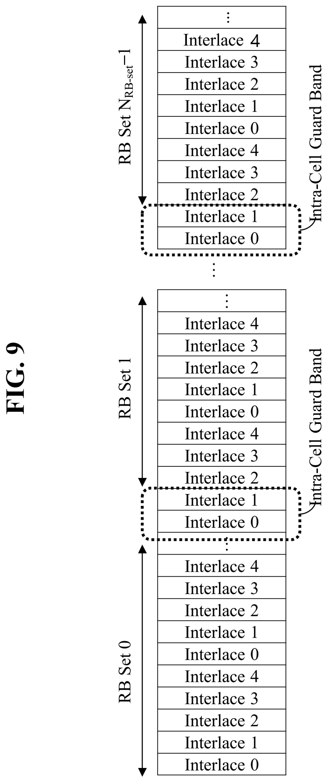

FIG. 9 illustrates an RB interlace. Referring to FIG. 9, multiple interlaces of RBs may be defined in the frequency domain. An interlace m∈ {0, 1, ..., M-1} may consist of (common) RBs {m, M+m, 2M+m, 3M+m, ...}, where M represents the number of interlaced RBs. That is, each interlace may consist of multiple non-contiguous RBs. In some implementations, M may be given as follows.

**[Table 3]**

| *u* | *M* |
|---|---|
| 0 | 10 |
| 1 | 5 |

The interlaced RBs (n^{u}_{IRB,m}∈ {0, 1, ...}) and the CRB n^{u}_{CRB} within BWP i and interlace m may be given as follows. n^{u}_{CRB}=M*n^{u}_{IRB,m}+N^{start,u}_{BWP,i}+((m-N^{start,u}_{BWP,i}) mod M).

The communication device (e.g., a UE) may transmit a signal/channel using one or more interlaced RBs.

For example, in a 3GPP-based system, resource block assignment information (RB) in the DCI carried by the PDCCH informs the UE of a set of up to M interlace indices and a set of up to N^{BWP}_{RB-set UL} contiguous RB sets (for DCI format 0_0 and DCI format 0_1 monitored in a UE-specific search space). The set of RBs consists of multiple contiguous RBs. DCI format 0_0 and DCI format 0_1 are the DCI formats used to schedule the PUSCH. In some implementations, the set of RBs may correspond to a frequency resource on which the CAP is performed individually in the shared spectrum. For the operation with shared spectrum channel access, uplink transmission subcarriers are mapped to one or more RB interlaces.

In some scenarios, the UE may determine that RB(s) corresponding to the intersection of i) the indicated interlace, ii) the indicated RB set(s), and (if any) the union of the guard bands between the indicated RB set(s) are the frequency resource for PUSCH transmission.

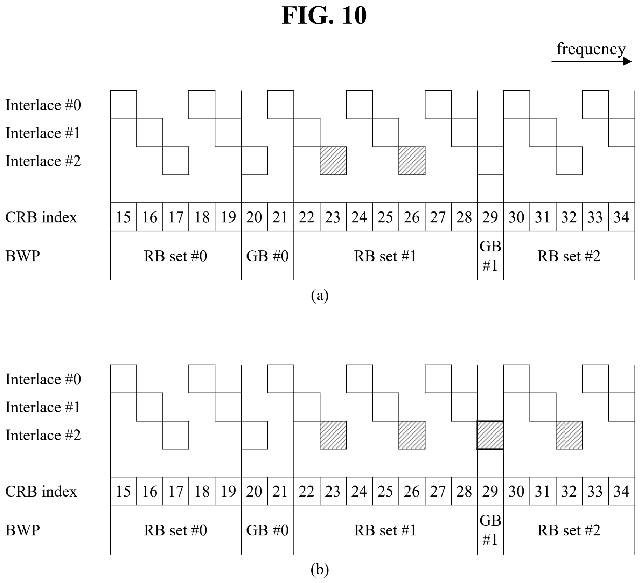

FIG. 10 illustrates interlaced RB-based uplink resource allocation in a shared spectrum. FIG. 10A illustrates a case in which one RB set is indicated through resource allocation information for PUSCH, and FIG. 10B illustrates a case in which contiguous RB sets are indicated through the resource allocation information for PUSCH.

Referring to FIG. 10A, based on resource allocation (RA) information for PUSCH indicating {Interlace #2, RB Set #1}, it may be determined that RBs belonging to Interlace #2 in RB Set #1 are PUSCH resources. That is, it may be determined that RBs corresponding to the intersection of {Interlace #2, RB Set #1} are PUSCH resources. Referring to FIG. 10B, based on the resource allocation information for PUSCH indicating {Interlace #2, RB Sets #1/#2}, it may be determined that RBs belonging to Interlace #2 in RB Sets #1 and #2 are PUSCH resources. In this case, the guard band (i.e., GB #1) between RB Set #1 and RB Set #2 may also be used as a PUSCH transmission resource. That is, in some implementations, it may be determined that RBs corresponding to the intersection of {Interlace #2, RB Set #1+RB Set #2+GB #1} are PUSCH resources. In this case, the guard band (i.e., GB #0), which is adjacent to RB Sets #1 and #2 but not present between RB Set #1 and RB Set #2, is not used as a PUSCH transmission resource.

As described above, to ensure stable support of the SL communication, it may be considered to support the SL communication in the shared spectrum. The SL BWP and SL resource pool described in the SL of the 3GPP-based system and the RB sets described in the shared spectrum transmission of the 3GPP-based system may be reused for SL transmission on the shared spectrum. Hereinafter, the shared spectrum supporting SL transmission is referred to as SL-U. Hereinafter, the implementations of the present specification that support coexistence between UL/DL transmission and SL transmission in the shared spectrum will be described.

In some implementations of the present specification, one or more SL BWPs may be (pre-)configured within a carrier on the shared spectrum. In some implementations of the present specification, the SL BWP may be (pre-)configured to include one or more SL resource pools. In some implementations of the present specification, at least one resource pool may be (pre-)configured to include an integer number of RB sets. Here, the RB set may correspond to about 20 MHz. In some implementations of the present specification, when a resource pool includes two adjacent RB sets, the RB(s) within the intra-cell guard band of the two adjacent RB sets may be defined as belonging to the resource pool. In some implementations of the present specification, interlaced RB-based transmission may be configured for PSCCH/PSSCH transmission for the SL BWP. When the UE is not configured to use interlaced RB-based PSCCH/PSSCH transmission for the SL BWP or when contiguous-RB-based transmission is configured, the UE may perform PSCCH/PSSCH transmission using the contiguous-RB-based transmission.

In some implementations of the present specification, when the interlaced RB-based PSCCH/PSSCH transmission is configured on the SL-U, one subchannel may be considered equal to K interlace(s). In some implementations, for example, at least K=1 and K=2 may be supported for 15 kHz subcarrier spacing (SCS), and at least K=1 may be supported for 30 kHz SCS.

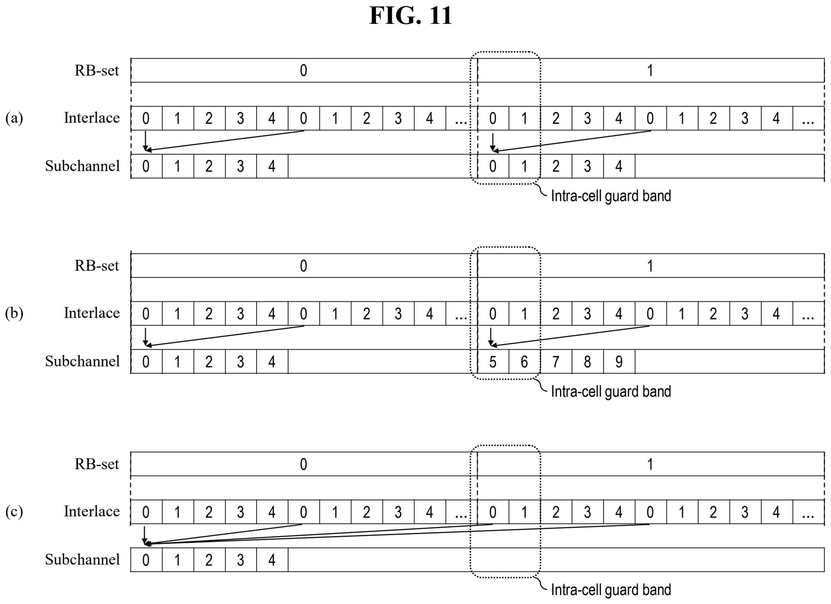

FIG. 11 illustrates examples of a resource pool structure in a frequency domain for sidelink transmission on the shared spectrum. In particular, FIG. 11 illustrates mapping relationships between RB sets, subchannels, and interlaces for 20 MHz bandwidth and 30 kHz SCS RB sets. In the example of FIG. 11, for 20 MHz bandwidth and 30 kHz SCS, it is assumed that the total number of RBs=51, the number of interlaces=5, and the number of RBs per interlace=10. In the example of FIG. 11, when the number of interlaces per subchannel, K=1, one subchannel corresponds to one interlace, and one subchannel (or one interlace) corresponds to 10 RBs.

For the interlaced RB-based PSCCH/PSSCH transmission on the shared spectrum, the following subchannel-to-interlace mapping methods may be considered.
- Option 1: A single subchannel is defined and indexed within a single RB set and is indexed periodically across different RB sets within the resource pool (see FIG. 11A).
- Option 2: A single subchannel is defined within a single RB set and is indexed first within the RB set and is then indexed incrementally across different RB sets within the resource pool (see FIG. 11B).
- Option 3: A single subchannel is defined across all RB sets within the resource pool. That is, the single subchannel includes K interlace(s) across all RB sets within the resource pool (see FIG. 11C).
- Option 4: A single subchannel is defined within a single RB set or two adjacent RB sets, and is indexed first within the RB set and is then indexed incrementally across different RB sets within the resource pool.
- Option 5: A single subchannel is defined within a single RB set, and is indexed first across different RB sets within the resource pool and is then indexed incrementally across different interlaces within the RB set.

In consideration of SL transmission in a unshared spectrum, in the implementations of the present specification, the PSCCH in the shared spectrum may be specified to be transmitted within a single subchannel. In this case, the following may be considered.
- Option 1: A PSCCH on a shared spectrum may be positioned within the lowest subchannel of the lowest RB set of the corresponding PSSCH, where the lowest subchannel does not need to be entirely contained within the lowest RB set.
- Option 2: A PSCCH on a shared spectrum may be positioned within each RB set of the corresponding PSSCH.

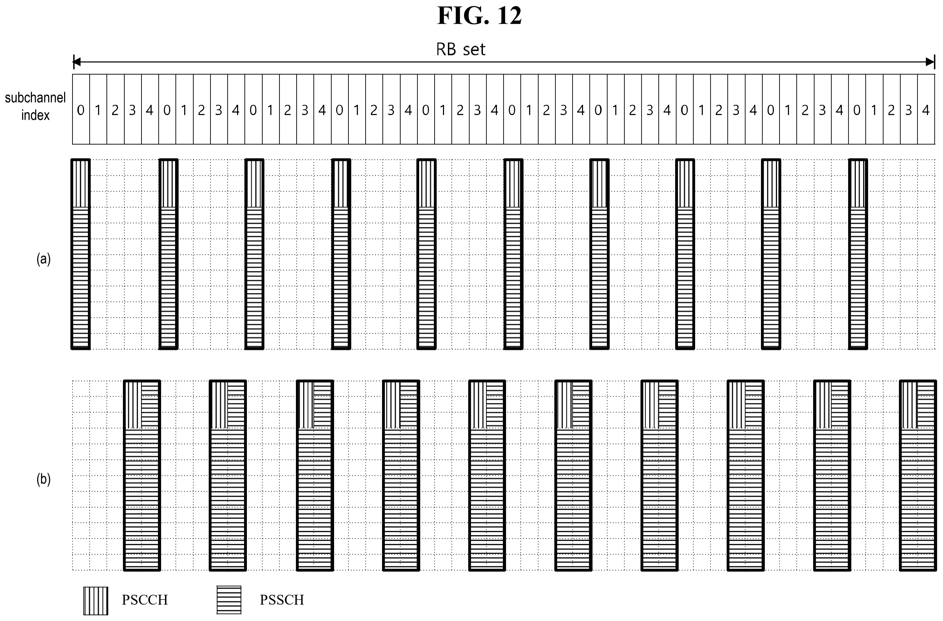

FIG. 12 illustrates examples of PSCCH/PSSCH transmissions according to some implementations of the present specification. In the examples of FIG. 12, it is assumed that a single RB set includes five interlaces, the number of interlaces per subchannel is K=1, and the number of RBs for the PSCCH is N_{PSCCH}=10. In particular, FIG. 12A illustrates an example of PSCCH/PSSCH transmission when the PSSCH is transmitted on subchannel 0, and FIG. 12B illustrates an example of PSCCH/PSSCH transmission when the PSSCH is transmitted on subchannels 3 and 4

When the number of RBs for the PSCCH, NPSCCH, is less than or equal to the number of RBs per subchannel, N_{sch}, the PSCCH may be transmitted within a single subchannel. When the UE is configured to perform interlaced RB-based transmission, for example, the PSCCH and the corresponding PSSCH may be transmitted as illustrated in FIG. 12.

In some scenarios, the number of RBs, Nsch, for the subchannel may be determined by the number of interlaces and the size of the interlace, and the number of RBs, N_{PSCCH}, for the PSCCH may be configured to one of {0, 12, 15, 20, 25}, and the PSCCH may be transmitted on a partial subchannel based on the N_{PSCCH}.

When the interlaced RB-based transmission is not configured for the SL BWP or the UE or when the contiguous-RB-based transmission is configured for the SL BWP or the UE, the UE may transmit the PSCCH and corresponding PSSCH on contiguous subchannel(s) including contiguous RBs in the frequency domain.

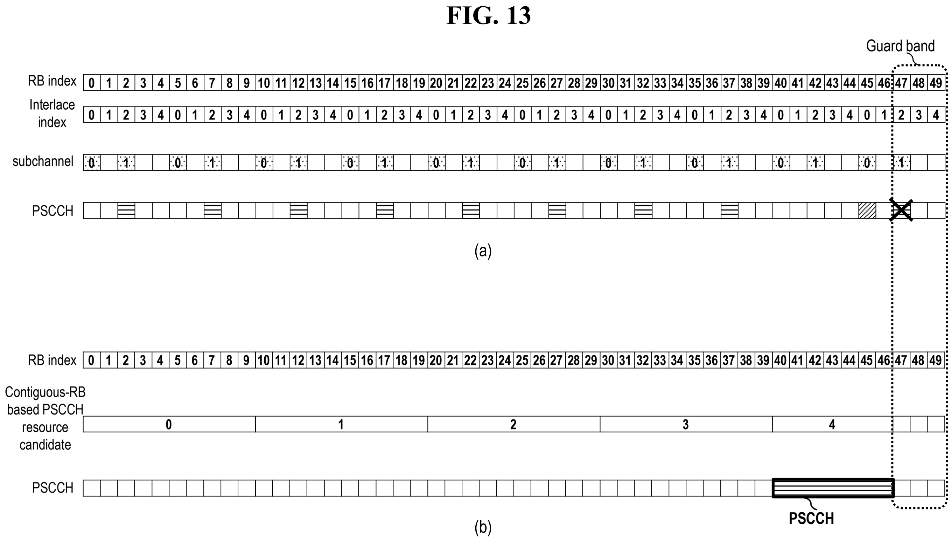

FIG. 13 illustrates examples of sidelink transmissions on the shared spectrum having guard bands. In particular, FIG. 13A illustrates interlaced RB-based SL transmission, and FIG. 13B illustrates contiguous-RB-based SL transmission.

For operation with shared spectrum access, a guard band that prevents interference between transmissions on adjacent RB sets may be provided between RB sets on a carrier/cell in the shared spectrum. Such a guard band is referred to as an intra-cell guard band. In some implementations, for a channel bandwidth or BWP including N_{RS-set} RB sets, the UE may receive N_{RB-set}-1 intra-cell guard bands, each of which may defined by a start CRB GB^{start}ₛ and the number of CRBs, GB^{size}ₛ, where s ∈ {0, 1, ..., N_{RB-set}-2}. The intra-cell guard bands separate N_{RB-set} RB sets, each of which is defined by a start CRB RB^{start}ₛ and an end CRB RB^{end}ₛ. An RB set with index s may consist of RB^{size}ₛ RBs, where RB^{size}ₛ=RB^{end}ₛ-RB^{start}ₛ+1. Within the BWP, RB sets may be numbered from 0 to N^{BWP}_{RB-set}-1, where N^{BWP}_{RB-set} is the number of RB sets included in the BWP.

Considering the potential mutual interference caused by transmissions by different UEs in adjacent RB sets in the shared spectrum, it is generally recommended that RBs within the intra-cell guard band of two adjacent RB sets not be used for transmission. However, for the PSSCH, when the UE may transmit on each LBT channel after performing the channel access procedure in a multi-channel case and when the UE uses both of these adjacent RB sets for PSCCH transmission, interference between the adjacent RB sets will not occur, and thus the RBs within the intra-cell guard band may be used for PSSCH transmission. However, the RBs within the intra-cell guard band are not used for PSCCH transmission. Since the PSCCH transmission is sensitive to reception quality, it is preferable to disallow transmission in the guard band in which interference is likely to exist.

Accordingly, when the PSCCH is defined to be positioned within the lowest subchannel with the lowest RB set of the corresponding/associated PSSCH, it may be difficult to properly transmit the PSCCH on subchannels adjacent to the guard band or including RB(s) within the guard band. In addition, the number of RBs per subchannel may vary due to the guard band. Hereinafter, a subchannel including fewer RBs than the Nsch configured/provided for the corresponding resource pool or BWP or a subchannel in which some of the Nsch RBs within the corresponding subchannel are unavailable for transmission, is referred to as a partial subchannel. Since the PSCCH is positioned within the lowest subchannel with the lowest RB set of the corresponding PSSCH, a situation in which the PSCCH is transmitted on the partial subchannel according to PSSCH scheduling. When the PSCCH is transmitted on the partial subchannel, some of the complex-valued modulation symbols of the SCI carried by the PSCCH may not be transmitted, resulting in performance degradation associated with SCI transmission. For the interlaced RB-based transmission, as illustrated in FIG. 13A, only a small number of RBs mapped to the PSCCH will fall within the guard band, and thus the performance loss due to the PSCCH guard band can be marginal. However, for the contiguous-RB-based transmission, as illustrated in FIG. 13B, a relatively large number of RBs mapped to the PSCCH may fall within the guard band, or the PSCCH may be mapped to the remaining RBs in the subchannels for the PSCCH, excluding those within the guard band, resulting in significant performance loss. Considering these issues, some implementations of the present specification regarding partial subchannel handling will be described below.

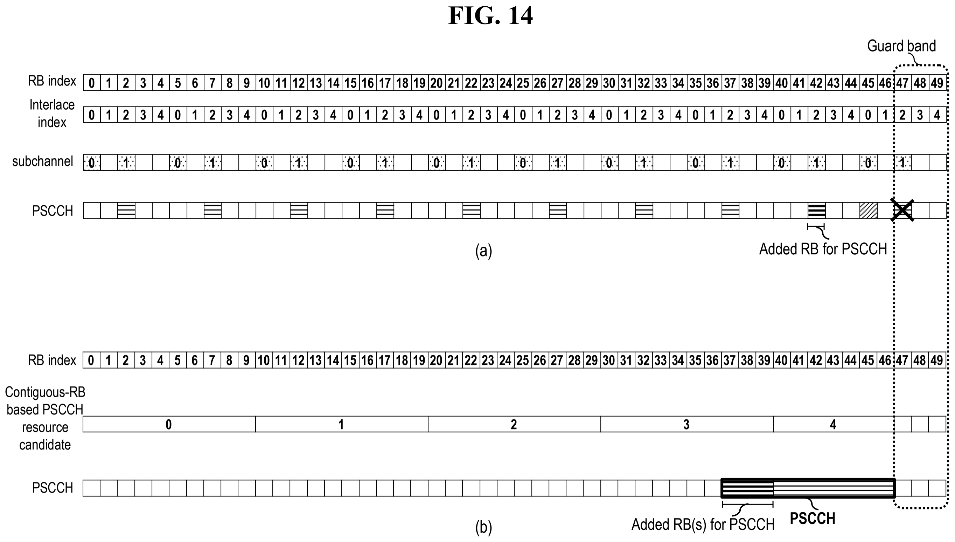

FIGS. 14 to 16 illustrate examples of PSSCH transmissions according to some implementations of the present specification.

> Alt1. When the PSCCH needs to be transmitted on a partial subchannel, additional RB(s) within an adjacent subchannel, an adjacent interlace, or an interlace within an adjacent subchannel are used for PSCCH transmission. FIG. 14A illustrates an example of a PSCCH transmission according to Alt1 for the interlaced RB-based transmission, and FIG. 14B illustrates an example of a PSCCH transmission according to Alt1 for the consecutive-RB-based transmission.

Referring to FIG. 14, in some implementations, when the PSCCH needs to be transmitted on a j^{th} subchannel, which is a partial subchannel, the highest n RB(s) within a (j-1)^{th} subchannel may be additionally used for PSCCH transmission, where n is the number of insufficient RBs. In some implementations, n may be equal to a value obtained by subtracting the number of RBs available for transmission within the partial subchannel, N_{sch,part}, from N_{sch}. Alternatively, in some implementations, n may correspond to a value obtained by subtracting the number of RBs available for transmission within a partial subchannel, N_{sch,part}, from the number of RBs required for PSCCH transmission, N_{PSCCH}.

According to Alt1, since the number of RBs required for PSCCH transmission, N_{PSCCH}, is guaranteed, PSCCH performance can also be ensured. Accordingly, it is possible to prevent additional signaling overhead that will be required when a PSCCH transmission error occurs. In addition, the partial subchannel may also be used for PSCCH transmission, thereby increasing resource efficiency.

> Alt2-1. When the PSCCH needs to be transmitted on the partial subchannel, another subchannel including all RBs (i.e., a subchannel rather than the partial subchannel) is used for PSCCH transmission.

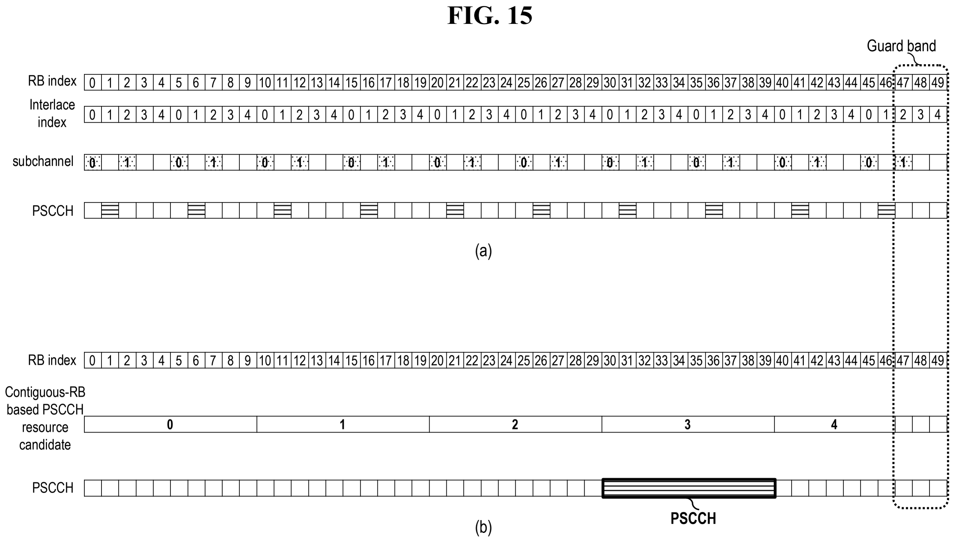

Referring to FIG. 15, in some implementations, when the PSCCH needs to be transmitted on the j^{th} subchannel, which is a partial subchannel, for example, when the PSSCH needs to be transmitted on the subchannel(s) having the j^{th} subchannel as the lowest subchannel, the associated PSCCH may be transmitted on the (j-1)^{th} subchannel. In this case, in some implementations, the SCI format transmitted on the PSCCH includes start subchannel information indicating whether the lowest subchannel of the scheduled PSSCH is the j^{th} subchannel or the (j-1)^{th} subchannel. For example, the SCI format may include 1-bit information as the start subchannel information, indicating that a first value indicates that an i^{th} subchannel on which the PSCCH is transmitted is the lowest subchannel of the corresponding PSSCH and a second value indicates that an (i+1)^{th} subchannel, which is the subchannel following the i^{th} subchannel on which the PSCCH is transmitted, is the lowest subchannel of the corresponding PSSCH. As another example, the SCI format may include 2-bit information as the start subchannel information for the PSSCH, indicating that a first value indicates that an i^{th} subchannel on which the PSCCH is transmitted is the lowest subchannel of the corresponding PSSCH, a second value indicates that an (i-1)^{th} subchannel, which is the subchannel prior to the i^{th} subchannel on which the PSCCH is transmitted, is the lowest subchannel of the corresponding PSSCH, and a third value indicates that an (i+1)^{th} subchannel, which is a subchannel following the i^{th} subchannel on which the PSCCH is transmitted, is the lowest subchannel of the corresponding PSSCH.

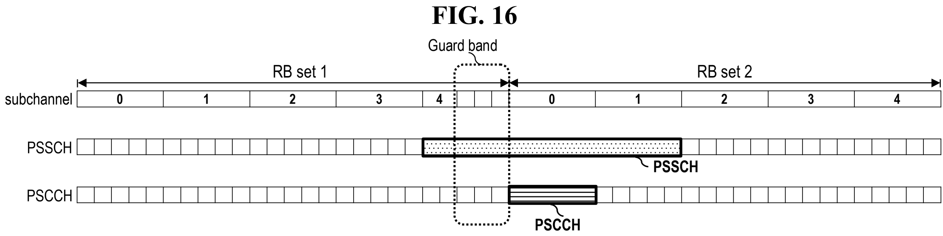

> Alt2-2. In a cell or BWP in which guard band(s) are configured, the lowest subchannel with the lowest RB set of the corresponding PSSCH among the subchannels including all RBs (i.e., subchannels that do not correspond to the partial subchannel) is used for PSCCH transmission. In the example illustrated in FIG. 16, when the PSSCH is transmitted across RB Set 1 and RB Set 2, and at the same time, subchannel 4, which is the lowest subchannel of RB Set 1, which is the optimal RB set, is a partial subchannel, the PSCCH is not mapped to partial subchannel 4, but may be mapped to subchannel 0 of RB Set 2, which corresponds to the lowest channel of the lowest RB set among the subchannels including all RBs among the subchannels to which the PSSCH is mapped, and transmitted. In some implementations, Alt2-2 may be applied under the condition that the PSSCH is transmitted on multiple RB sets.

Referring to FIG. 16, in some implementations of the present specification, in the cell or BWP in which guard band(s) are configured, the lowest subchannel with the lowest RB set of the PSSCH among the subchannels including all RBs is used for PSCCH transmission. In this case, in some implementations, the SCI format transmitted on the PSCCH may include start subchannel information indicating which subchannel is the lowest subchannel of the scheduled PSSCH. For example, the SCI format may include 1-bit information as the start subchannel information, indicating that a first value indicates that an i^{th} subchannel on which the PSCCH is transmitted is the lowest subchannel of the corresponding PSSCH and a second value indicates that an (i-1)^{th} subchannel, which is the subchannel following the i^{th} subchannel on which the PSCCH is transmitted, is the lowest subchannel of the corresponding PSSCH. As another example, the SCI format may include 2-bit information as the start subchannel information for the PSSCH, indicating that a first value indicates that an i^{th} subchannel on which the PSCCH is transmitted is the lowest subchannel of the corresponding PSSCH, a second value indicates that an (i-1)^{th} subchannel, which is the subchannel prior to the i^{th} subchannel on which the PSCCH is transmitted, is the lowest subchannel of the corresponding PSSCH, and a third value indicates that an (i+1)^{th} subchannel, which is a subchannel following the i^{th} subchannel on which the PSCCH is transmitted, is the lowest subchannel of the corresponding PSSCH.

According to Alt2-1 and Alt2-2, since the PSCCH is transmitted on N_{PSCCH} RBs required for stable transmission, PSCCH performance can be ensured. In addition, according to Alt2-1 and Alt2-2, since the PSCCH resource candidates for each subchannel defined during the operation without shared spectrum channel access remain unchanged during the operation with the shared spectrum channel access, the existing PSCCH monitoring operations may be applied.

In some implementations, Alt1, Alt2-1, and Alt2-2 described above may be applied under specific cases. For example, the specific cases may include:
- A case in which the resource pool is configured for contiguous-RB-based transmission;
- A case in which the guard band is greater than Nₜₕᵣₛₕ RBs, where Nₜₕᵣₛₕ may be predefined or configured via higher-level layer signaling (e.g., RRC signaling);
- A case in which n obtained by subtracting the number of RBs, N_{sch,part}, available for transmission within a partial subchannel from the number of RBs of the PSCCH, N_{PSCCH}, is greater than a value that is predefined or configured by higher-level layer signaling (e.g., RRC signaling);
- A case in which transmission using a partial subchannel for the PSCCH is explicitly configured not to be allowed; and/or
- A case in which the PSSCH is scheduled on multiple RB sets.

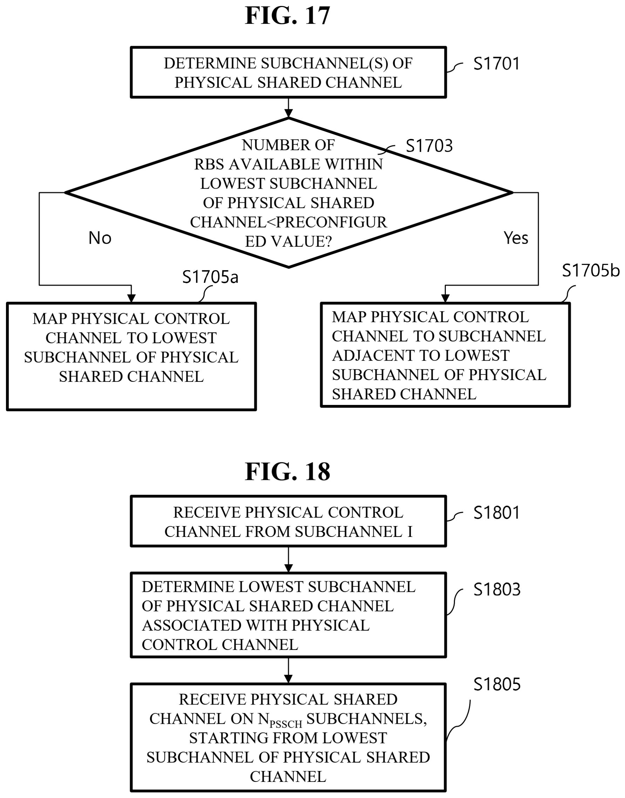

FIG. 17 illustrates a portion of a process in which a communication device performs sidelink transmission according to some implementations of the present specification.

The communication device may receive configuration(s) for SL communication through higher-level layer signaling (e.g., RRC signaling) (from a BS or another communication device) (S1701). The communication device may be the first wireless device of FIG. 2 or the second wireless device of FIG. 2. The configuration(s) may include configuration(s) described above in relation to SL communication (e.g., SL BWP configuration, the number of subchannels, L, the number of RBs per subchannel, Nsub, and/or the number of RBs for a PSCCH, N_{PSCCH}). The configuration(s) may include configurations regarding a resource pool for the SL or a transmission method for the SL BWP. For example, the configuration(s) may include configurations regarding whether PSSCH transmission within the resource pool or within the SL BWP is interlaced RB-based transmission. In some implementations, the communication device may assume contiguous RB-based transmission when the interlaced RB-based transmission is not configured for the resource pool or the SL BWP.

The communication device may determine subchannel(s) for PSSCH transmission among the subchannels within the resource pool. In principle, the PSCCH carrying the SCI format used for scheduling the PSSCH is transmitted on the lowest subchannel of the subchannel(s) of the PSSCH (i.e., the subchannel of the lowest index among the subchannels of the PSSCH). When the lowest subchannel of the PSSCH is not a partial subchannel, for example, when the number of RBs available for transmission on the lowest subchannel is not less than a preconfigured value (No in S1703), the PSCCH may be mapped to the lowest subchannel of the PSSCH (S1705a). In some implementations, the preconfigured value may be N_{sch}. Alternatively, in some implementations, the preconfigured value may be N_{PDCCH}. Alternatively, in some implementations, the preconfigured value may be a value provided or configured to the communication device through higher-level layer signaling (e.g., RRC signaling).

In some implementations of the present specification, when the lowest subchannel of the PSSCH is a partial subchannel, for example, when the number of RBs available for transmission in the lowest subchannel is not less than the preconfigured value, the communication device may map the PSCCH to n RBs among the RBs of the lowest subchannel and the RBs of adjacent subchannels according to Alt1 described above. Alternatively, in some implementations of the present specification, when the lowest subchannel of the PSSCH is a partial subchannel, for example, when the number of RBs available for transmission in the lowest subchannel is less than the preconfigured value (Yes in S1703), the communication device may map the PSCCH to an adjacent subchannel rather than the lowest subchannel of the PSSCH according to Alt2-1 or Alt2-2 (S1705b).

The SCI format carried by the PSCCH may include information on the subchannel(s) of the PSSCH. In some implementations of the present specification, the SCI format may include start subchannel information on whether the subchannel on which the PSCCH is mapped/transmitted is the same as or different from the lowest subchannel of the PSSCH. In some implementations of the present specification, the SCI format may include start subchannel information on the lowest subchannel of the PSSCH.

In the present specification, mapping the PSCCH to subchannels, RB(s), or interlace(s) may include mapping complex-valued modulation symbols for the SCI format carried by the PSCCH to the corresponding subchannels, RB(s), or interlace(s). The TX UE obtains transmission bits by encoding information bits in the SCI format carried on the PSCCH through channel coding based on polar code or the like. The transmission bits b(0),...,b(M_{bit}-1) in the SCI format may be scrambled, and the scrambled bits may be modulated into complex-valued modulation symbols d(0),...,b(M_{symb}-1) through modulation. Here, M_{bit} is the number of bits transmitted on the PSCCH, and Msymb is the number of complex-valued modulation symbols determined by the modulation method. For example, when the modulation method for the PSCCH is quadruple phase shift keying (QPSK), it may be determined that M_{symb}=M_{bit}/2.

The complex-valued symbols for the SCI format carried by the PSCCH are mapped to radio resources (e.g., resource elements (k, l)) allocated for PSCCH transmission (and not used for the DM-RS associated with the PSCCH), in sequence starting from a complex-valued symbol d(0) of the lowest index, in increasing order of subcarrier index k followed by OFDM symbol index l. In this case, the subcarrier index k may be increased within the RBs determined by the PSCCH resource mapping method according to some implementations of the present specification.

The communication device may map the PSSCH associated with the PSCCH to the subchannel(s) of the PSSCH. The communication device may map the PSSCH to resources, which are not used for transmitting the PSCCH, an associated DM-RS, or a phase tracking reference signal (PT-RS), among the resources of the RBs of the subchannel(s).

The communication device may transmit the PSCCH and the PSSCH on subchannels to which the PSCCH and the PSSCH are mapped (the mapped RBs).

FIG. 18 illustrates a portion of a process in which the communication device performs sidelink reception according to some implementations of the present specification.

The communication device may receive configuration(s) for SL communication through higher-level layer signaling (e.g., RRC signaling) (from a BS or another communication device). The communication device may be the second wireless device of FIG. 2 or the first wireless device of FIG. 2. The configuration(s) may include configuration(s) described above in relation to SL communication (e.g., SL BWP configuration, the number of subchannels, L, the number of RBs per subchannel, N_{sub}, and/or the number of RBs for a PSCCH, N_{PSCCH}). The configuration(s) may include configurations regarding a resource pool for the SL or a transmission method for the SL BWP. For example, the configuration(s) may include configurations regarding whether PSSCH transmission within the resource pool or within the SL BWP is interlaced RB-based transmission. In some implementations, the communication device may assume contiguous RB-based transmission when the interlaced RB-based transmission is not configured for the resource pool or the SL BWP.

The communication device may monitor PSCCH resource candidates within subchannels within a resource pool. In some implementations of the present specification, the communication device may perform PSCCH monitoring, assuming that PSCCH resource candidates are positioned on N_{PSCCH} RBs, starting from the lowest index RB of each subchannel within the resource pool. For example, the communication device may receive PSCCH resource candidates on N_{PSCCH} RBs of each subchannel within the configured resource pool and decode the PSCCH according to an SCI format. When the communication device detects the SCI format carried by the PSCCH on the subchannel within the resource pool, the communication device may determine that the PSCCH has been received or detected (S1801).

Based on the SCI format carried by the PSCCH, the communication device may receive the PSSCH on N_{PSSCH} subchannels, starting from the lowest subchannel of the PSSCH. The SCI format may include information on the N_{PSCCH}. According to some implementations of the present specification, the PSCCH may be transmitted on the lowest subchannel of the PSSCH, but when the lowest subchannel is a partial subchannel, the PSCCH may be transmitted across RBs of the lowest subchannel and some RB(s) of an adjacent subchannel (see FIG. 14), or transmitted within an adjacent subchannel rather than the lowest subchannel (see FIG. 15 or 16), and thus the SCI format may include start subchannel information on what the lowest subchannel of the PSSCH is. The communication device may determine the lowest subchannel of the PSSCH based on the start subchannel information (S1803), and receive or decode the PSSCH on N_{PSSCH} subchannels, starting from the lowest subchannel (S1805).

The communication device may attempt to decode the SCI format on the PSCCH candidate resources of each subchannel, assuming that the complex-valued symbols for the SCI format carried by the PSCCH are mapped in sequence, starting from the complex-valued symbol d(0) of the lowest index, to radio resources (e.g., resource elements (k, l)) allocated for PSCCH transmission (and not used for a DM-RS associated with the PSCCH), first in increasing order of subcarrier index k and then in increasing order of OFDM symbol index l. In this case, the communication device may assume that the subcarrier index k is increased within the RBs determined by the PSCCH resource mapping method according to some implementations of the present specification.

The communication device may perform reception or decoding of the PSSCH, assuming that the PSSCH associated with the PSCCH is mapped within the subchannel(s) of the PSSCH and transmitted. The communication device may decode the PSSCH, assuming that the PSSCH has been mapped to resources, which are not used for transmitting the PSCCH, an associated DM-RS, or a phase tracking reference signal (PT-RS), among the resources of the RBs of the subchannel(s).

As described above, the lowest N_{PSCCH} RBs in each subchannel may be used as PSCCH resource candidates. That is, the PSCCH resource candidates in each subchannel may consist of the lowest N_{PSCCH} RBs of the corresponding subchannel. Accordingly, the PSCCH transmission on the lowest subchannel of the PSSCH may be problematic when some of the lowest N_{PSCCH} RBs of the lowest subchannel, that is, some of the PSCCH resource candidates, fall within the guard band. Considering this point, in some implementations, Alt1, Alt2-1, and/or Alt2-2 of the present specification may be defined to be applied when some of the lowest N_{PSCCH} RBs in a subchannel fall within the guard band or are unavailable for transmission, or when some of the lowest N_{PSCCH} RBs of the lowest subchannel of a PSCCH fall within the guard band or are unavailable for transmission.

A TX UE may perform operations according to some implementations of the present specification in relation to the PSCCH transmission. The TX UE may include at least one transceiver, at least one processor, and at least one computer memory that is operably connected to the at least one processor and stores instructions that, when executed, cause the at least one processor to perform operations according to some implementations of the present specification. A processing device for the TX UE may include at least one processor, and at least one computer memory that is operably connected to the at least one processor and stores instructions that, when executed, cause the at least one processor to perform operations according to some implementations of the present specification. A computer-readable (non-transitory) storage medium may store at least one computer program including instructions that, when executed by the at least one processor, cause the at least one processor to perform operations according to some implementations of the present specification. A computer program or computer program product may be recorded on at least one computer-readable (non-transitory) storage medium and may include instructions that, when executed, cause (at least one processor) to perform operations according to some implementations of the present specification.

In the TX UE, the processing device, the computer-readable (non-transitory) storage medium, and/or the computer program product, the operations may include determining subchannels of a PSSCH within a resource pool for a sidelink, mapping a PSCCH carrying an SCI format including information on the subchannels to one of the subchannels within the resource pool, mapping the PSSCH to the subchannels for PSSCH transmission, and transmitting the PSCCH and the PSSCH on the subchannels to which the PSCCH and the PSSCH are mapped. In some implementations, the mapping of the PSCCH to one of the subchannels within the resource pool may include mapping the PSCCH to an adjacent subchannel rather than a subchannel of the lowest index of the PSSCH based on the number of resource blocks available for transmission in the subchannel of the lowest index among the subchannels of the PSSCH being less than a preconfigured number.

In some implementations, the mapping of the PSCCH to one of the subchannels within the resource pool may include mapping the PSCCH to a subchannel of the lowest index of the PSSCH based on the number of resource blocks available for transmission in the subchannel of the lowest index among the subchannels of the PSSCH being not less than a preconfigured number.

In some implementations, the preconfigured number may be N_{sch} configured for the resource pool, where N_{sch} may be the number of contiguous RBs within each subchannel.

In some implementations, the preconfigured number may be N_{PSCCH} configured for the resource pool, where N_{PSCCH} is the number of RBs for PSCCH transmission within the resource pool.

In some implementations, the SCI format may include start subchannel information on the subchannel of the lowest index of the PSSCH.

In some implementations, the start subchannel information may include information on whether the subchannel to which the PSCCH is mapped is the subchannel of the lowest index of the PSSCH.

A RX UE may perform operations according to some implementations of the present specification in relation to the PSCCH reception. The RX UE may include at least one transceiver, at least one processor, and at least one computer memory that is operably connected to the at least one processor and stores instructions that, when executed, cause the at least one processor to perform operations according to some implementations of the present specification. A processing device for the RX UE may include at least one processor, and at least one computer memory that is operably connected to the at least one processor and stores instructions that, when executed, cause the at least one processor to perform operations according to some implementations of the present specification. A computer-readable (non-transitory) storage medium may store at least one computer program including instructions that, when executed by the at least one processor, cause the at least one processor to perform operations according to some implementations of the present specification. A computer program or computer program product may be recorded on at least one computer-readable (non-transitory) storage medium and may include instructions that, when executed, cause (at least one processor) to perform operations according to some implementations of the present specification.

In the RX UE, the processing device, the computer-readable (non-transitory) storage medium, and/or the computer program product, the operations may include receiving a PSCCH carrying an SCI format for subchannels of a PSSCH on a subchannel within a resource pool for a sidelink, and receiving the PSSCH on the subchannels of the PSSCH based on the SCI format. When the number of resource blocks available for transmission in the subchannel of the lowest index among the subchannels of the PSSCH is less than a preconfigured number, the subchannel receiving the PSCCH may differ from the subchannel of the lowest index of the PSSCH.

In some implementations, when the number of resource blocks available for transmission in the subchannel of the lowest index among the subchannels of the PSSCH is not less than a preconfigured number, the subchannel receiving the PSCCH may be the same as the subchannel of the lowest index of the PSSCH.

In some implementations, the preconfigured number may be N_{sch} configured for the resource pool, where N_{sch} may be the number of contiguous RBs within each subchannel.

In some implementations, the preconfigured number may be N_{PSCCH} configured for the resource pool, where N_{PSCCH} is the number of RBs for PSCCH transmission within the resource pool.

In some implementations, the SCI format may include start subchannel information on the subchannel of the lowest index of the PSSCH.

In some implementations, the start subchannel information may include information on whether the subchannel receiving the PSCCH is the subchannel of the lowest index of the PSSCH.

As described above, the examples disclosed in the present specification are provided to enable those skilled in the art to implement and practice the present specification. While the above description has been provided with reference to the examples of the present specification, those skilled in the art can modify and change the examples of the present specification in various ways. Accordingly, the present specification is not intended to be limited to the examples described herein but is intended to provide the broadest scope consistent with the principles and novel features disclosed herein.

The implementations of the present specification may be used in wireless communication systems, including a BS, user equipment, and other devices.

## Claims

1. A method of transmitting, by a communication device, a channel in a wireless communication system, the method comprising:
determining subchannels of a physical shared channel within a resource pool for direct communication between communication devices;
mapping a physical control channel carrying a control information format including information on the subchannels to one of the subchannels within the resource pool;
mapping the physical shared channel to the subchannels for transmission of the physical shared channel; and
transmitting the physical control channel and the physical shared channel on the subchannels to which the physical control channel and the physical shared channel are mapped,
wherein the mapping of the physical control channel to one of the subchannels within the resource pool includes mapping the physical control channel to an adjacent subchannel rather than a subchannel of the lowest index of the physical shared channel, based on the number of resource blocks (RBs) available for transmission within the subchannel of the lowest index among the subchannels of the physical shared channel being less than a preconfigured number.

2. The method of claim 1, wherein the mapping of the physical control channel to one of the subchannels within the resource pool includes mapping the physical control channel to the subchannel of the lowest index of the physical shared channel, based on the number of RBs available for transmission within the subchannel of the lowest index among the subchannels of the physical shared channel being not less than the preconfigured number.

3. The method of claim 1, wherein the preconfigured number is N_{sch} configured for the resource pool, where N_{sch} is the number of contiguous RBs within each subchannel.

4. The method of claim 1, wherein the preconfigured number is N_{PSCCH} configured for the resource pool, where N_{PSCCH} is the number of RBs for physical control channel transmission within the resource pool.

5. The method of claim 1, wherein the control information format includes start subchannel information on the subchannel of the lowest index of the physical shared channel.

6. The method of claim 5, wherein the start subchannel information includes information on whether the subchannel to which the physical control channel is mapped is the subchannel of the lowest index of the physical shared channel.

7. A method of receiving, by a communication device, a channel in a wireless communication system, the method comprising:
receiving a physical control channel carrying a control information format regarding subchannels of a physical shared channel from a subchannel within a resource pool for direct communication between communication devices; and
receiving the physical shared channel on the subchannels of the physical shared channel based on the control information format,
wherein the subchannel receiving the physical control channel differs from a subchannel of a lowest index of the physical shared channel, based on the number of resource blocks (RBs) available for transmission within the subchannel of the lowest index among the subchannels of the physical shared channel being less than a preconfigured number.

8. The method of claim 7, wherein the subchannel receiving the physical control channel is the same as the subchannel of the lowest index of the physical shared channel, based on the number of RBs available for transmission within the subchannel of the lowest index among the subchannels of the physical shared channel being not less than the preconfigured number.

9. The method of claim 7, wherein the preconfigured number is N_{sch} configured for the resource pool, where N_{sch} is the number of contiguous RBs within each subchannel.

10. The method of claim 7, wherein the preconfigured number is N_{PSCCH} configured for the resource pool, where N_{PSCCH} is the number of RBs for physical control channel transmission within the resource pool.

11. The method of claim 7, wherein the control information format includes start subchannel information on the subchannel of the lowest index of the physical shared channel.

12. The method of claim 11, wherein the start subchannel information includes information on whether the subchannel receiving the physical control channel is the subchannel of the lowest index of the physical shared channel.

13. A communication device for transmitting a channel in a wireless communication system, comprising:
at least one transceiver;
at least one processor; and
at least one memory that is operatively connected to the at least one processor and stores instructions that, when executed, cause the at least one processor to perform operations,
wherein the operations includes:
determining subchannels of a physical shared channel within a resource pool for direct communication between communication devices;
mapping a physical control channel carrying a control information format including information on the subchannels to one of the subchannels within the resource pool;
mapping the physical shared channel to the subchannels for transmission of the physical shared channel; and
transmitting the physical control channel and the physical shared channel on the subchannels to which the physical control channel and the physical shared channel are mapped,
wherein the mapping of the physical control channel to one of the subchannels within the resource pool includes mapping the physical control channel to an adjacent subchannel rather than a subchannel of the lowest index of the physical shared channel, based on the number of resource blocks (RBs) available for transmission within the subchannel of the lowest index among the subchannels of the physical shared channel being less than a preconfigured number.

14. A computer-readable non-transitory storage medium including at least one computer program that causes at least one processor to perform operations, wherein the operations includes:
determining subchannels of a physical shared channel within a resource pool for direct communication between communication devices;
mapping a physical control channel carrying a control information format including information on the subchannels to one of the subchannels within the resource pool;
mapping the physical shared channel to the subchannels for transmission of the physical shared channel; and
transmitting the physical control channel and the physical shared channel on the subchannels to which the physical control channel and the physical shared channel are mapped,
wherein the mapping of the physical control channel to one of the subchannels within the resource pool includes mapping the physical control channel to an adjacent subchannel other than a subchannel of the lowest index of the physical shared channel, based on the number of resource blocks (RBs) available for transmission within the subchannel of the lowest index among the subchannels of the physical shared channel being less than a predetermined number.

15. A communication device for receiving a channel in a wireless communication system, comprising:
at least one transceiver;
at least one processor; and
at least one memory that is operatively connected to the at least one processor and stores instructions that, when executed, cause the at least one processor to perform operations,
wherein the operations includes:
receiving a physical control channel carrying a control information format regarding subchannels of a physical shared channel from a subchannel within a resource pool for direct communication between communication devices; and
receiving the physical shared channel on the subchannels of the physical shared channel based on the control information format,
wherein the subchannel receiving the physical control channel differs from a subchannel of a lowest index of the physical shared channel, based on the number of resource blocks (RBs) available for transmission within the subchannel of the lowest index among the subchannels of the physical shared channel being less than a preconfigured number.

16. A computer-readable non-transitory storage medium including at least one computer program that causes at least one processor to perform operations, wherein the operations includes:
receiving a physical control channel carrying a control information format regarding subchannels of a physical shared channel from a subchannel within a resource pool for direct communication between communication devices; and
receiving the physical shared channel on the subchannels of the physical shared channel based on the control information format,
wherein the subchannel receiving the physical control channel differs from a subchannel of a lowest index of the physical shared channel, based on the number of resource blocks (RBs) available for transmission within the subchannel of the lowest index among the subchannels of the physical shared channel being less than a predetermined number.
